# EUROPEAN PATENT APPLICATION

(11) **EP 4 845 133 A1**
(43) Date of publication of application: **25.11.2026**
(21) Application number: 24926684.2
(22) Date of filing: 30.08.2024
(51) Int. Cl.: H04M 1/72409

(54) **DEVICE COLLABORATION METHOD AND APPARATUS, CHIP, AND COMPUTER READABLE STORAGE MEDIUM**

(30) Priority: 29.02.2024 CN 202410231464
(71) Applicant: Huawei Technologies Co., Ltd., Shenzhen, Guangdong 518129 (CN)
(72) Inventor: ZHANG, Chen, Shenzhen, Guangdong 518129 (CN); ZHENG, Kui, Shenzhen, Guangdong 518129 (CN); NI, Yintang, Shenzhen, Guangdong 518129 (CN)
(74) Representative: Grünecker Patent- und Rechtsanwälte PartG mbB
(86) International application number: PCT/CN2024/116150
(87) International publication number: WO 2025/179817

(57) **Abstract**

This application provides a device collaboration method and apparatus, a chip, and a computer-readable storage medium. The method includes: sending a probe request in response to a first user operation, where the first user operation is used to enable a device collaboration function; determining at least one second electronic device based on at least one received probe response to the probe request, where the first electronic device and the at least one second electronic device belong to a same communication group; and displaying a first control representing the first electronic device and a second control representing the second electronic device. After enabling the device collaboration function, the first electronic device may automatically discover the at least one second electronic device in the same communication group, for example, a second electronic device corresponding to a different account and a second electronic device corresponding to a same account. This expands a range of automatic discovery of devices and improves an automatic discovery capability of the first electronic device, thereby resolving a problem in a related technology that a limited discovery range in solutions for automatically discovering devices affects user experience.

## Description

This application claims priority to Chinese Patent Application No. 202410231464.7, filed with the China National Intellectual Property Administration on February 29, 2024 and entitled "DEVICE COLLABORATION METHOD AND APPARATUS, CHIP, AND COMPUTER-READABLE STORAGE MEDIUM", which is incorporated herein by reference in its entirety.

### TECHNICAL FIELD

This application relates to the terminal field, and in particular, to a device collaboration method and apparatus, a chip, and a computer-readable storage medium.

### BACKGROUND

With rapid development of science and technology, intelligent devices have become an important part of our daily life. The intelligent devices may be, for example, devices such as a speaker, a Vision, and a headset. In a related technology, a HarmonyOS (HarmonyOS) distributed operating system may implement automatic discovery of intelligent devices under a same account based on a distributed soft bus technology, so that a user selects, based on a requirement, a corresponding intelligent device from the automatically discovered intelligent devices for function transfer.

However, due to account privacy-related restrictions, only automatic discovery of the intelligent devices under the same account can be implemented. This limits a range of automatic discovery of the intelligent devices and affects user experience.

### SUMMARY

This application provides a device collaboration method and apparatus, a chip, and a computer-readable storage medium. A first electronic device may automatically discover at least one second electronic device in a same communication group. This expands a range of automatic discovery of intelligent devices and improves user experience.

According to a first aspect, a device collaboration method is provided. The method includes: sending a probe request in response to a first user operation, where the first user operation is used to enable a device collaboration function; receiving at least one probe response to the probe request; determining at least one second electronic device based on the at least one probe response, where the first electronic device and the at least one second electronic device belong to a same communication group, an account corresponding to a part or all of the at least one second electronic device is different from an account corresponding to the first electronic device, and the probe response indicates that the first electronic device and the second electronic device belong to the same communication group; and displaying a first control and at least one second control, where the first control represents the first electronic device, and the second control represents the second electronic device. Different second controls represent different second electronic devices.

It should be understood that the device collaboration method provided in the first aspect may be applied to an electronic device, the electronic device is the first electronic device, and the first electronic device may be specifically a terminal device having a device collaboration function, for example, a device like a mobile phone, a tablet computer, or a computer.

In embodiments of this application, after enabling the device collaboration function in response to the first user operation, the first electronic device may automatically discover the at least one second electronic device corresponding to the same communication group (family group), for example, a second electronic device corresponding to a same account and a second electronic device corresponding to a different account. This expands a range of automatic discovery of devices. Subsequently, a user may select, based on a requirement, a corresponding device from the automatically discovered devices for collaboration. This expands an optional range of devices required for task collaboration or function transfer, and improves user experience.

The second electronic device may be an intelligent device, for example, may be a device like a mobile phone, glasses, a tablet computer, a personal computer (personal computer, PC), a Vision, a watch, a speaker, a head unit, or a headset. The first electronic device and the at least one second electronic device are in a same network, for example, a same local area network or a same wide area network. When the first electronic device and the at least one second electronic device are in the same network, the first electronic device and the at least one second electronic device may communicate with each other through Bluetooth, wireless fidelity (wireless fidelity, Wi-Fi), or the like.

In a feasible implementation, the first electronic device may broadcast a probe request, where the probe request is used to probe a second electronic device that is in a same network as the first electronic device and that is in a same communication group as the first electronic device. A device that receives the probe request may determine, based on group information stored in the device and information carried in the probe request, whether the device and the first electronic device belong to a same communication group. When determining that the device and the first electronic device belong to the same communication group, the device sends a probe response to the first electronic device. Then, the first electronic device may determine, based on the probe response, that the device is the second electronic device. Therefore, in this manner, the first electronic device may automatically discover the at least one second electronic device based on the at least one probe response. This implements automatic discovery of devices in a same communication group, and expands a range of automatic discovery of devices.

The at least one second electronic device may be all or a part of devices other than the first electronic device in electronic devices in the communication group to which the first electronic device belongs. The account corresponding to the first electronic device does not exist in accounts corresponding to the at least one second electronic device, in other words, each of the at least one second electronic device is a different-account device. The account corresponding to the first electronic device exists in accounts corresponding to the at least one second electronic device, in other words, the at least one second electronic device includes both a same-account device and a different-account device. The same-account device refers to a second electronic device whose account is the same as the account corresponding to the first electronic device. The different-account device refers to a second electronic device whose account is different from the account corresponding to the first electronic device.

In a feasible implementation, both the first control and the second control may be presented in a form of icon. For example, the first control may be an icon representing the first electronic device, and the second control may be an icon representing the second electronic device. The user may select a corresponding device from the first electronic device and the at least one second electronic device by dragging an icon to perform task collaboration. This expands an optional range of devices required for task collaboration or function transfer, and further improves user experience.

In a feasible implementation, the first control and the at least one second control may be obtained in at least one of the following manners:

Manner 1: The first electronic device sends, to a server, a control obtaining request used to obtain the first control and the at least one second control, and the first electronic device may receive the first control and the at least one second control that are sent by the server based on the control obtaining request. The first control and the at least one second control may be generated by the server, and may also be sent by another device to the server.

Manner 2: The first electronic device may send an obtaining request to the server, where the obtaining request is used to obtain first device information and second device information of the at least one second electronic device; and the first electronic device may receive the first device information and the second device information of the at least one second electronic device from the server. The first device information represents a status and/or an attribute of the first electronic device, and the second device information represents a status and/or an attribute of the second electronic device. The obtaining request carries identification information of the first electronic device and identification information of the at least one second electronic device.

Manner 3: The first electronic device may determine, from a plurality of pre-generated controls, a control corresponding to the identification information of the first electronic device, to obtain the first control, and determine, from the plurality of pre-generated controls, a control corresponding to the identification information of the second electronic device, to obtain the second control.

Based on the foregoing solution, the first electronic device may flexibly select different obtaining manners to obtain the first control and the at least one second control, thereby improving flexibility of obtaining the first control and the at least one second control.

In a feasible implementation, the probe request carries related information of the first electronic device, and the related information may be at least one of the identification information of the first electronic device, the account corresponding to the first electronic device, and group identification information corresponding to the first electronic device. In this way, the device that receives the probe request may determine, based on the related information of the first electronic device, whether the device and the first electronic device are in the same communication group, and send the probe response to the first electronic device when determining that the device and the first electronic device are in the same communication group, so that the first electronic device automatically discovers a device (the second electronic device) in the same communication group based on the probe response.

In a feasible implementation, the probe response is sent by the second electronic device when the second electronic device determines, based on the probe request and stored group information corresponding to the second electronic device, that the second electronic device and the first electronic device belong to the same communication group.

The group information corresponding to the second electronic device is from the server. The server maintains group information of a plurality of communication groups. For each communication group, the server may send the group information to a plurality of devices in the communication group (which may also be referred to as a plurality of devices corresponding to the communication group), so that the plurality of devices implement automatic discovery between the devices after receiving the group information.

In a feasible implementation, the probe response carries the group identification information of the communication group and the identification information of the second electronic device.

In a feasible implementation, the group information includes at least one of the group identification information, an account of a group member, and identification information of an electronic device corresponding to the account of the group member.

In a feasible implementation, after displaying the first control and the at least one second control, the first electronic device may further perform the following steps: sending a processing request to the server in response to a second user operation, where the processing request is used to establish a device collaboration link between a collaboration device and a to-be-collaborated device, the collaboration device and the to-be-collaborated device are the first electronic device and an electronic device in the at least one second electronic device, and the second user operation is used to associate the collaboration device with the to-be-collaborated device.

The first electronic device may determine, in response to the second user operation, the to-be-collaborated device and the collaboration device from the first electronic device and the at least one second electronic device, and generate the processing request used to establish the device collaboration link between the collaboration device and the to-be-collaborated device. The first electronic device may serve as the to-be-collaborated device, the collaboration device, or a device configured only to forward the processing request (that is, the first electronic device neither serves as the to-be-collaborated device nor serves as the collaboration device, but is only a device configured to trigger establishment of the device collaboration link). The second user operation may be an operation of dragging a control to a specified area corresponding to another control by the user.

Based on the foregoing solution, a device collaboration link between devices in a communication group is established, so that task collaboration or function transfer can be performed between the devices through the device collaboration link. This improves a collaboration capability and task execution efficiency, can better serve the user and an application scenario, and further improves user experience.

The server receives the processing request from the first electronic device, where the processing request is used to establish the device collaboration link between the collaboration device and the to-be-collaborated device. The server may send a control instruction to the to-be-collaborated device based on the processing request, where the control instruction is used to control the to-be-collaborated device to establish the device collaboration link.

In a feasible implementation, the first electronic device serves as the collaboration device, and may perform the following operations: receiving a verification request from the to-be-collaborated device, where the verification request is used to determine whether the to-be-collaborated device is an authorized device, the verification request is sent by the to-be-collaborated device based on the control instruction from the server, and the control instruction is sent by the server based on the processing request; and sending a verification response to the to-be-collaborated device when determining, based on the verification request, that the to-be-collaborated device is the authorized device, where the verification response is used to determine whether the first electronic device is an authorized device.

Sending the verification response to the to-be-collaborated device when determining, based on the verification request, that the to-be-collaborated device is the authorized device may be implemented in the following manner: parsing the verification request to obtain identification information of the to-be-collaborated device and first encrypted information, where the first encrypted information is obtained by encrypting the identification information of the to-be-collaborated device based on a group identifier key corresponding to the to-be-collaborated device and a user identifier key corresponding to the to-be-collaborated device; encrypting the identification information of the to-be-collaborated device based on a group identifier key corresponding to the first electronic device and a user identifier key corresponding to the first electronic device, to obtain second encrypted information; when the first encrypted information matches the second encrypted information, determining that the to-be-collaborated device is the authorized device; and sending the verification response to the to-be-collaborated device, where the verification response carries the identification information of the first electronic device and third encrypted information, and the third encrypted information is obtained by encrypting the identification information of the first electronic device based on the group identifier key corresponding to the first electronic device and the user identifier key corresponding to the first electronic device.

Based on the foregoing solution, when determining that the first electronic device is the authorized device, the to-be-collaborated device establishes the device collaboration link between the to-be-collaborated device and the first electronic device, to subsequently implement task collaboration or function transfer between the first electronic device and the to-be-collaborated device through the device collaboration link, thereby improving user experience.

In a feasible implementation, the first electronic device serves as the to-be-collaborated device, and may perform the following operations: receiving the control instruction from the server, where the control instruction is used to control the first electronic device to establish the device collaboration link, and the control instruction is sent by the server based on the processing request; sending a verification request to the collaboration device based on the control instruction, where the verification request is used to determine whether the first electronic device is an authorized device; and establishing the device collaboration link when determining, based on a verification response from the collaboration device, that the collaboration device is an authorized device, where the verification response is sent by the collaboration device when the collaboration device determines that the first electronic device is the authorized device.

Establishing the device collaboration link when determining, based on the verification response from the collaboration device, that the collaboration device is the authorized device may be implemented in the following manner: parsing the verification response to obtain identification information of the collaboration device and third encrypted information, where the third encrypted information is obtained by encrypting the identification information of the collaboration device based on a group identifier key corresponding to the collaboration device and a user identifier key corresponding to the collaboration device; encrypting the identification information of the collaboration device based on a group identifier key corresponding to the first electronic device and a user identifier key corresponding to the first electronic device, to obtain fourth encrypted information; when the third encrypted information matches the fourth encrypted information, determining that the collaboration device is the authorized device; and establishing the device collaboration link.

Based on the foregoing solution, when determining that the collaboration device is the authorized device, the first electronic device establishes the device collaboration link between the first electronic device and the collaboration device, to subsequently implement task collaboration or function transfer between the first electronic device and the collaboration device through the device collaboration link, thereby improving user experience.

According to a second aspect, a device collaboration method is provided. The method may be performed by a server, or may be performed by a component of the server, or may be implemented by a logic module or software that can implement or partially implement functions of the server.

The method includes: receiving an obtaining request from a first electronic device, where the obtaining request is used to obtain first device information of the first electronic device and second device information of at least one second electronic device, the first device information represents a status and/or an attribute of the first electronic device, the second device information represents a status and/or an attribute of the second electronic device, the first electronic device and the at least one second electronic device belong to a same communication group, and an account corresponding to a part or all of the at least one second electronic device is different from an account corresponding to the first electronic device; and sending the first device information and the second device information of the at least one second electronic device to the first electronic device, where the first device information is used to display a first control representing the first electronic device, and the second device information is used to display a second control representing the second electronic device.

In a feasible implementation, the first device information includes at least one of model information, configuration information, status information, and size information of the first electronic device, an image of the first electronic device, and the like. The second device information may include at least one of model information, configuration information, status information, and size information of the second electronic device, and an image of the second electronic device.

In a feasible implementation, the method further includes: receiving a processing request from the first electronic device, where the processing request is used to establish a device collaboration link between a collaboration device and a to-be-collaborated device; and sending a control instruction to the to-be-collaborated device based on the processing request, where the control instruction is used to control the to-be-collaborated device to establish the device collaboration link.

In a feasible implementation, the method further includes: sending group information of the communication group to a plurality of electronic devices in the communication group, where the group information is used by an electronic device to determine whether the electronic device and another electronic device are in the same communication group, and the plurality of electronic devices include the first electronic device and the at least one second electronic device.

In a feasible implementation, the group information includes at least one of group identification information, an account of a group member, and identification information of an electronic device corresponding to the account of the group member.

For beneficial effects of the implementations of the second aspect, refer to the descriptions in the first aspect. Details are not described herein again.

According to a third aspect, a device collaboration method is provided. The method may be performed by a second electronic device, or may be performed by a component (for example, a processor, a chip, or a chip system) of the second electronic device, or may be implemented by a logic module or software that can implement all or a part of functions of the second electronic device.

The method includes: receiving a probe request from a first electronic device; and sending a probe response to the first electronic device when determining, based on the probe request, that the second electronic device and the first electronic device belong to a same communication group, where the probe response indicates that the first electronic device and the second electronic device belong to the same communication group, and at least a part of electronic devices in the communication group correspond to different accounts.

The probe request carries related information of the first electronic device, and the related information may be, for example, at least one of identification information of the first electronic device, an account corresponding to the first electronic device, and group identification information corresponding to the first electronic device.

In a feasible implementation, the method further includes: determining, based on the probe request and stored group information corresponding to the second electronic device, whether the first electronic device and the second electronic device belong to the same communication group; and sending the probe response to the first electronic device when the first electronic device and the second electronic device belong to the same communication group.

In a feasible implementation, the probe response carries the group identification information of the communication group and the identification information of the second electronic device.

In a feasible implementation, the group information may be obtained in the following manner: receiving the group information from a server, where the group information includes at least one of the group identification information, an account of a group member, and identification information of an electronic device corresponding to the account of the group member.

In a feasible implementation, the second electronic device may serve as a collaboration device, and may perform the following operations: receiving a verification request from a to-be-collaborated device, where the verification request is used to determine whether the to-be-collaborated device is an authorized device, and the verification request is sent by the to-be-collaborated device based on a control instruction from the server; and sending a verification response to the to-be-collaborated device when determining, based on the verification request, that the to-be-collaborated device is the authorized device, where the verification response is used to determine whether the second electronic device is an authorized device.

Sending the verification response to the to-be-collaborated device when determining, based on the verification request, that the to-be-collaborated device is the authorized device may be implemented in the following manner: parsing the verification request to obtain identification information of the to-be-collaborated device and first encrypted information, where the first encrypted information is obtained by encrypting the identification information of the to-be-collaborated device based on a group identifier key corresponding to the to-be-collaborated device and a user identifier key corresponding to the to-be-collaborated device; encrypting the identification information of the to-be-collaborated device based on a group identifier key corresponding to the second electronic device and a user identifier key corresponding to the second electronic device, to obtain second encrypted information; when the first encrypted information matches the second encrypted information, determining that the to-be-collaborated device is the authorized device; and sending the verification response to the to-be-collaborated device, where the verification response carries the identification information of the second electronic device and third encrypted information, and the third encrypted information is obtained by encrypting the identification information of the second electronic device based on the group identifier key corresponding to the second electronic device and the user identifier key corresponding to the second electronic device.

Based on the foregoing solution, when the second electronic device serves as the collaboration device, the to-be-collaborated device may be the first electronic device or a second electronic device other than the second electronic device in the at least one second electronic device. When determining that the second electronic device is the authorized device, the to-be-collaborated device may establish the device collaboration link between the to-be-collaborated device and the second electronic device. Then, the second electronic device may perform task collaboration or function transfer with the to-be-collaborated device through the device collaboration link, thereby improving user experience.

In a feasible implementation, the second electronic device may serve as a to-be-collaborated device, and may perform the following operations: receiving a control instruction from the server, where the control instruction is used to control establishment of a device collaboration link between the second electronic device and a collaboration device; sending a verification request to the collaboration device based on the control instruction, where the verification request is used to determine whether the second electronic device is an authorized device; and establishing the device collaboration link when determining, based on a verification response from the collaboration device, that the collaboration device is an authorized device, where the verification response is sent by the collaboration device when the collaboration device determines that the second electronic device is the authorized device.

Establishing the device collaboration link when determining, based on the verification response from the collaboration device, that the collaboration device is the authorized device may be implemented in the following manner: parsing the verification response to obtain identification information of the collaboration device and third encrypted information, where the third encrypted information is obtained by encrypting the identification information of the collaboration device based on a group identifier key corresponding to the collaboration device and a user identifier key corresponding to the collaboration device; encrypting the identification information of the collaboration device based on a group identifier key corresponding to the second electronic device and a user identifier key corresponding to the second electronic device, to obtain fourth encrypted information; when the third encrypted information matches the fourth encrypted information, determining that the collaboration device is the authorized device; and establishing the device collaboration link.

Based on the foregoing solution, when the second electronic device serves as the to-be-collaborated device, the collaboration device may be the first electronic device or a second electronic device other than the second electronic device in the at least one second electronic device. When determining that the collaboration device is the authorized device, the second electronic device may establish the device collaboration link between the second electronic device and the collaboration device. Then, the second electronic device may perform task collaboration or function transfer with the collaboration device through the device collaboration link, thereby improving user experience.

According to a fourth aspect, a device collaboration system is provided. The device collaboration system includes a first electronic device, at least one second electronic device, and a server. The server separately establishes a communication connection to the first electronic device and the at least one second electronic device. The first electronic device and the at least one second electronic device belong to a same communication group.

The server is configured to send group information of the communication group to the first electronic device and the at least one second electronic device. The first electronic device is configured to send a probe request in response to a first user operation, where the first user operation is used to enable a device collaboration function. The second electronic device is configured to receive the probe request from the first electronic device; and send a probe response to the first electronic device when determining, based on the probe request and the group information from the server, that the second electronic device and the first electronic device belong to the same communication group, where the probe response indicates that the first electronic device and the second electronic device belong to the same communication group. The first electronic device is further configured to determine the at least one second electronic device based on at least one probe response, where an account corresponding to a part or all of the at least one second electronic device is different from an account corresponding to the first electronic device.

According to a fifth aspect, a device collaboration apparatus is provided, including a module or a unit configured to perform the method in any one of the first aspect or the possible implementations of the first aspect, or including a module or a unit configured to perform the method in any one of the second aspect or the possible implementations of the second aspect, or including a module or a unit configured to perform the method in any one of the third aspect or the possible implementations of the third aspect.

According to a sixth aspect, a device collaboration apparatus is provided, including a processor, where the processor is coupled to a memory, the memory is configured to store a computer program or instructions, and the processor is configured to execute the computer program or the instructions stored in the memory, to implement the method in any one of the first aspect or the possible implementations of the first aspect, or implement the method in any one of the second aspect or the possible implementations of the second aspect, or implement the method in any one of the third aspect or the possible implementations of the third aspect.

In a possible implementation, the apparatus further includes the memory coupled to the processor.

In a possible implementation, there are one or more processors, and/or one or more memories.

In a possible implementation, the memory may be integrated with the processor, or the memory and the processor are separately disposed.

In a possible implementation, the apparatus further includes a communication interface, and the processor is coupled to the communication interface.

In an implementation, the apparatus is a network device. For example, the communication interface may be a transceiver or an input/output interface.

In another implementation, the apparatus is a chip in the device collaboration apparatus. For example, the communication interface may be an input/output interface.

According to a seventh aspect, an electronic device is provided. The electronic device includes a memory, one or more processors, and one or more programs. The one or more programs are stored in the memory. When the one or more processors execute the one or more programs, the electronic device is caused to implement the method in any one of the first aspect or the possible implementations of the first aspect, or implement the method in any one of the second aspect or the possible implementations of the second aspect, or implement the method in any one of the third aspect or the possible implementations of the third aspect.

According to an eighth aspect, a processor is provided, and includes an input circuit, an output circuit, and a processing circuit. The processing circuit is configured to: receive a signal via the input circuit, and transmit the signal via the output circuit, to cause the processor to perform the method in any one of the foregoing aspects or the possible implementations of any one of the foregoing aspects.

During specific implementation, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to a ninth aspect, a chip is provided, and includes a processor configured to invoke a computer program from a memory and run the computer program, to cause a device collaboration apparatus on which the chip is mounted to perform the method in any one of the foregoing aspects or the possible implementations of any one of the foregoing aspects.

According to a tenth aspect, a computer-readable storage medium is provided. The computer-readable storage medium stores a computer program (which may also be referred to as code or instructions). When the computer program runs on a computer, the computer is caused to perform the method in any one of the foregoing aspects or the possible implementations of any one of the foregoing aspects.

According to an eleventh aspect, a computer program product is provided. The computer program product includes a computer program (which may also be referred to as code or instructions). When the computer program runs, a computer is caused to perform the method in any one of the foregoing aspects or the possible implementations of any one of the foregoing aspects.

### BRIEF DESCRIPTION OF DRAWINGS

FIG. 1 is a diagram of a structure of an electronic device according to an embodiment of this application;
FIG. 2 is a block diagram of a software structure of an electronic device 100 according to an embodiment of this application;
FIG. 3 is a diagram of a super device interface of a mobile phone in a related technology according to an embodiment of this application;
FIG. 4A and FIG. 4B are a diagram of mutual authentication between a mobile phone and a Vision in a related technology according to an embodiment of this application;
FIG. 5 is a diagram of a home screen of a mobile phone in a device collaboration method according to an embodiment of this application;
FIG. 6 is a diagram of a control center interface of a mobile phone in a device collaboration method according to an embodiment of this application;
FIG. 7 is a diagram of a super device interface in a device collaboration method according to an embodiment of this application;
FIG. 8 is a diagram of delivering group information of a communication group by a server in a device collaboration method according to an embodiment of this application;
FIG. 9 is a diagram of structures of a device p1 and a device p2 in a device collaboration method according to an embodiment of this application;
FIG. 10 is a diagram of a UI of a mobile phone in a device collaboration method according to an embodiment of this application;
FIG. 11A to FIG. 11E are a diagram of an operation interface for adding a member to a communication group (family group) in a device collaboration method according to an embodiment of this application;
FIG. 12 is a schematic flowchart of adding a member to a communication group (family group) in a device collaboration method according to an embodiment of this application;
FIG. 13 is a diagram of a task collaboration scenario in a device collaboration method according to an embodiment of this application;
FIG. 14 is a diagram of another task collaboration scenario in a device collaboration method according to an embodiment of this application;
FIG. 15A to FIG. 15C are a schematic flowchart of a device collaboration method according to an embodiment of this application;
FIG. 16A and FIG. 16B are a schematic flowchart of another device collaboration method according to an embodiment of this application;
FIG. 17 is a diagram of another super device interface in a device collaboration method according to an embodiment of this application;
FIG. 18A and FIG. 18B are a schematic flowchart of still another device collaboration method according to an embodiment of this application;
FIG. 19 is a diagram of still another super device interface in a device collaboration method according to an embodiment of this application;
FIG. 20A and FIG. 20B are a schematic flowchart of a device collaboration method according to another embodiment of this application;
FIG. 21 is a diagram of a super device interface in a device collaboration method according to another embodiment of this application;
FIG. 22 is a diagram of a structure of a device collaboration apparatus according to an embodiment of this application;
FIG. 23 is a diagram of a structure of another device collaboration apparatus according to an embodiment of this application; and
FIG. 24 is a diagram of a structure of an electronic device according to an embodiment of this application.

### DESCRIPTION OF EMBODIMENTS

The following describes the technical solutions in embodiments of this application with reference to the accompanying drawings in embodiments of this application.

In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, in the descriptions of embodiments of this application, "a plurality of" means two or more.

Terms "first", "second", and "third" mentioned below are merely used for a purpose of description, and shall not be understood as an indication or an implication of relative importance or an implicit indication of a quantity of indicated technical features. Therefore, a feature limited by "first", "second", or "third" may explicitly or implicitly include one or more features.

An embodiment of this application provides an electronic device. The electronic device is configured to perform the device collaboration method provided in this application. In some embodiments of this application, the electronic device may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like, or may be another device or apparatus that can perform device collaboration. A specific type of the electronic device is not limited in embodiments of this application.

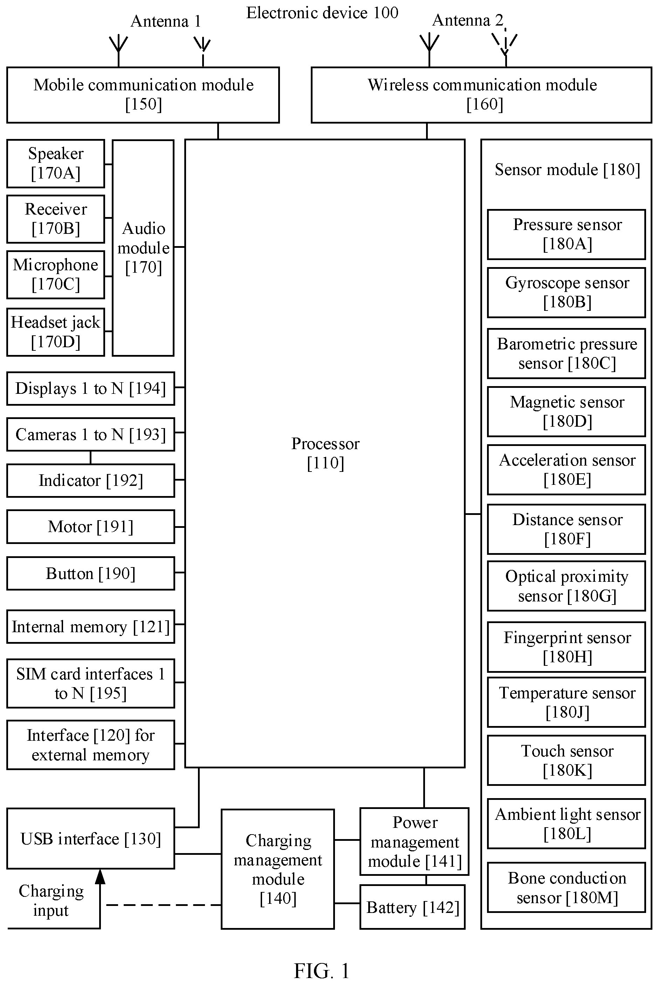

For example, FIG. 1 is a diagram of a structure of an electronic device according to an embodiment of this application.

As shown in FIG. 1, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The processor 110 communicates with the display 194 via the DSI interface, to implement a display function of the electronic device 100.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Structures of the antenna 1 and the antenna 2 in FIG. 1 are merely an example. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The electronic device 100 implements a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The interface 120 for external memory may be configured to connect to an external storage card, for example, a micro SD card, to extend a storage capability of the electronic device 100. The external storage card communicates with the processor 110 through the interface 120 for external memory, to implement a data storage function. For example, files such as music and videos are stored in the external storage card.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The touch sensor 180K is also referred to as a "touch panel". The touch sensor 180K may be disposed on the display 194. A touchscreen formed by the touch sensor 180K and the display 194 is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 100 at a location different from that of the display 194.

The button 190 includes a power button, a volume button, and the like. The button 190 may be a mechanical button, or may be a touch-sensitive button. The electronic device 100 may receive a button input, and generate a button signal input related to a user setting and function control of the electronic device 100.

A software system of the electronic device 100 may use a layered architecture, an eventdriven architecture, a microkernel architecture, a micro service architecture, or a cloud architecture. In embodiments of this application, an Android (Android) system of a layered architecture is used as an example to describe a software structure of the electronic device 100.

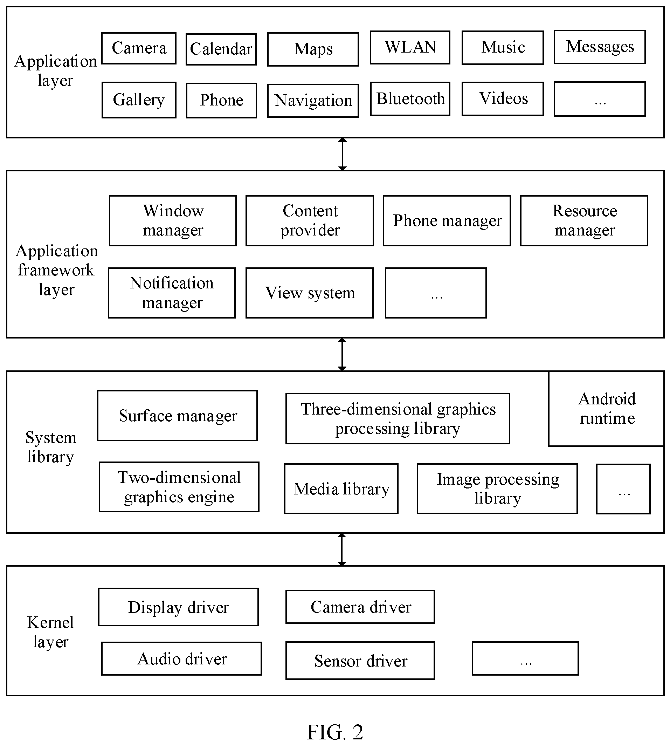

FIG. 2 is a block diagram of the software structure of the electronic device 100 according to an embodiment of this application.

It should be understood that, in a layered architecture, software may be divided into several layers, and each layer has a clear role and task. Communication between layers may be performed through a software interface.

As shown in FIG. 2, an Android system may be divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for applications at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audios, calls that are made and received, a browsing history, a bookmark, a phone book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device 100, for example, management of a call status (including answering, declining, or the like).

The resource manager provides various resources such as a localized character string, an icon, an image, a layout file, and a video file for an application.

The notification manager enables an application to display notification information in a status bar, may be configured to convey a notification message, and may automatically disappear after a short pause without requiring a user interaction. For example, the notification manager is configured to notify download completion, give a message notification, and the like. The notification manager may alternatively be a notification that appears in a top status bar of the system in a form of graph or scroll bar text, for example, a notification of an application that is run on a background, or may be a notification that appears on the screen in a form of dialog window. For example, text information is displayed in the status bar, an alert tone is made, the terminal device vibrates, or an indicator light blinks.

The Android runtime includes a core library and a virtual machine. The Android runtime is used to schedule and manage the Android system.

The core library includes two parts: a function that needs to be invoked in a java language, and a core library of Android.

The application layer and the application framework layer run on the virtual machine. The virtual machine executes java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, an open graphics library for embedded systems (open graphics library for embedded systems, OpenGL ES)), and a 2D graphics engine (for example, a skia graphics library (skia graphics library, SGL)).

The surface manager is configured to manage a display subsystem and provide fusion of 2D and 3D layers for a plurality of applications.

The media library supports playback and recording of a plurality of audio formats, playback of a plurality of video formats, and static image files. The media library may support a plurality of audio and video encoding formats, for example, MPEG-4, H.264, moving picture experts group audio layer III (moving picture experts group audio layer III, MP3), advanced audio coding (advanced audio coding, AAC), adaptive multi-rate (adaptive multi-rate, AMR), joint photographic experts group (joint photographic experts group, JPG), and portable network graphics (portable network graphics, PNG).

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

A user interface (user interface, UI) is a medium interface for interaction and information exchange between an application (application, app) or an operating system (operating system, OS) and a user, and implements conversion between an internal form of information and a form acceptable to the user. The user interface is source code written in a specific computer language like java or an extensible markup language (extensible markup language, XML). The source code is parsed and rendered on an electronic device, and is finally presented as content that can be recognized by the user. The user interface is usually represented in a form of graphical user interface (graphical user interface, GUI), and is a user interface displayed in a graphical manner and related to computer operations. The user interface may be a visual interface element like a text, an icon, a button, a menu, a tab, a text box, a dialog box, a status bar, a navigation bar, or a widget that is displayed on a display of the electronic device.

A control is an element in a user interface, and is configured to: receive a user input, display information, or perform a specific function.

A device collaboration function refers to a multi-device collaboration mode, and can implement cross-system and cross-device collaborative operations and resource sharing.

The electronic device shown in FIG. 1 and FIG. 2 may be the first electronic device or the second electronic device in the following embodiments. The following describes in detail a device collaboration method provided in embodiments of this application with reference to the accompanying drawings and application scenarios.

A HarmonyOS distributed operating system is a distributed operating system oriented to the internet of things era. Based on the HarmonyOS distributed operating system, collaboration between devices, especially inter-device communication and data sharing in various scenarios (such as smart home and internet of vehicles), can be implemented. A distributed soft bus is a core feature of the HarmonyOS distributed operating system, and aims to implement seamless connection and collaboration between different devices. Different devices may be connected through the distributed soft bus, to form a virtual distributed bus network. In this way, a connection between devices is more flexible, thereby providing richer and more intelligent inter-device interaction experience.

Currently, a distributed soft bus capability of the HarmonyOS distributed operating system may be used to implement automatic discovery and function transfer of devices under a same account (that is, the same account). When a function or task on a device under the same account requires support from another device, data and functions can be seamlessly transferred between these devices. For example, when a user starts to listen to music on a device, the music may be transferred to another device for continuous playback.

However, in consideration of security and privacy, each account usually has an independent device list and configuration information, and there is no effective communication mechanism between accounts. Even if devices have near-field communication capabilities, manual addition and complex configuration (authentication) operations are often required. As a result, automatic discovery and function transfer cannot be implemented.

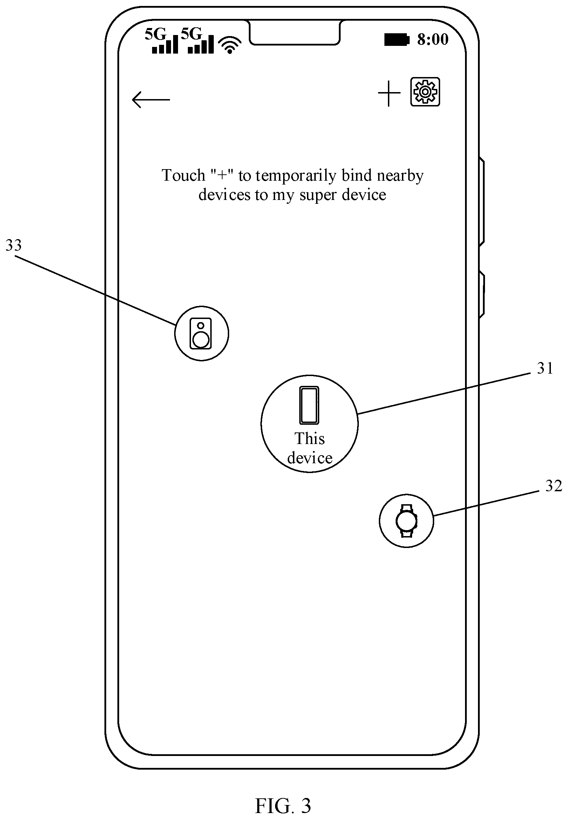

For example, the user may tap a super device function widget in a control center interface of a mobile phone, and the mobile phone may display, in response to the tap operation of the user, a super device interface shown in FIG. 3. As shown in FIG. 3, an icon 31, an icon 32, and an icon 33 are displayed in the super device interface. The icon 31 represents the mobile phone (this device), the icon 32 represents a watch, and the icon 33 represents a speaker. An account corresponding to the watch, an account corresponding to the speaker, and an account corresponding to the mobile phone are the same. It is clear that, currently, the mobile phone can only automatically discover devices under a same account, and display, in the super device interface, icons representing these devices.

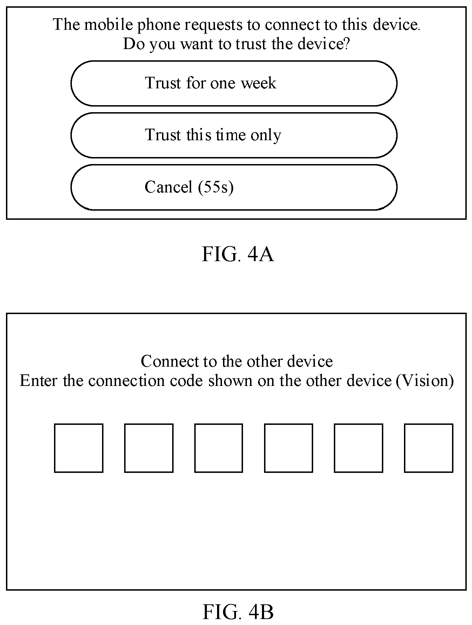

When the user wants to transfer content being displayed on the mobile phone to a Vision corresponding to another account for displaying, the user needs to bind the Vision to the account corresponding to the mobile phone. After the binding is completed, an icon of the Vision is displayed in the super device interface, so that the content being displayed on the mobile phone can be subsequently transferred to the Vision for displaying by dragging the icon of the Vision to a specified area. In a process of binding the Vision to the account corresponding to the mobile phone, the user needs to perform an operation as prompted to complete mutual authentication between the mobile phone and the Vision. For example, prompt information shown in FIG. 4A is displayed on the Vision. After the user selects "Trust for one week" or "Trust this time only", a connection code is displayed on the Vision, for example, the connection code is "710827". Then, a prompt box shown in FIG. 4B is displayed on the mobile phone, and the user needs to manually enter the connection code in the prompt box shown in FIG. 4B. After the connection code is entered, the mobile phone may bind the Vision to the account corresponding to the mobile phone, and then the icon representing the Vision may be displayed in the super device interface of the mobile phone. Clearly, this binding process is complex and time-consuming, affecting user experience.

Therefore, how to implement automatic discovery between devices corresponding to different accounts (that is, automatic discovery between cross-account devices) is an urgent problem to be resolved currently.

Based on this, this application provides a device collaboration method. The device collaboration method may be applied to a first electronic device in a device collaboration system. The device collaboration system may include the first electronic device, at least one second electronic device, and a server. The server separately establishes a communication connection to the first electronic device and the at least one second electronic device.

In the device collaboration method, the first electronic device may send a probe request in response to a first user operation, where the first user operation is used to enable a device collaboration function; receive at least one probe response to the probe request; determine the at least one second electronic device based on the at least one probe response, where the first electronic device and the at least one second electronic device belong to a same communication group, an account corresponding to a part or all of the at least one second electronic device is different from an account corresponding to the first electronic device, and the probe response indicates that the first electronic device and the second electronic device belong to the same communication group; and display a first control and at least one second control, where the first control represents the first electronic device, and the second control represents the second electronic device. In this way, after the first electronic device (for example, the mobile phone in the foregoing example) enables the device collaboration function, the first electronic device may automatically discover a second electronic device corresponding to a different account (for example, a Vision corresponding to another account in the foregoing example) and second electronic devices corresponding to a same account (for example, a watch and a speaker that are under a same account as the mobile phone in the foregoing example). This expands a range of automatic discovery of devices. Subsequently, a user may select, based on a requirement, a corresponding device from the automatically discovered devices for collaboration. This expands an optional range of devices required for task collaboration or function transfer, and improves user experience. The user does not need to manually bind the second electronic device under a different account to the first electronic device. This resolves problems of complex operations, waste of a large amount of time, and impact on user experience in a binding process.

The first electronic device may be a terminal device having a device collaboration function. For example, the first electronic device may be a device like a mobile phone, a tablet computer, or a computer. The second electronic device is a device that is automatically discovered by the first electronic device and that belongs to a same communication group as the first electronic device. The second electronic device may be a device like a mobile phone, glasses, a tablet computer, a personal computer (personal computer, PC), a Vision, a watch, a speaker, a head unit, or a headset. The first electronic device and the at least one second electronic device are in a same network, for example, a same local area network or a same wide area network. When the first electronic device and the at least one second electronic device are in the same network, the first electronic device and the at least one second electronic device may communicate with each other through Bluetooth, wireless fidelity (wireless fidelity, Wi-Fi), or the like.

In the following example interfaces provided in embodiments of this application, an example in which the first electronic device is a mobile phone is mainly used to display related user interfaces. However, this does not constitute a limitation on this application. A super device interface is a user interface used for device collaboration of the mobile phone. The super device interface may have different interface layouts, and may include more or fewer controls.

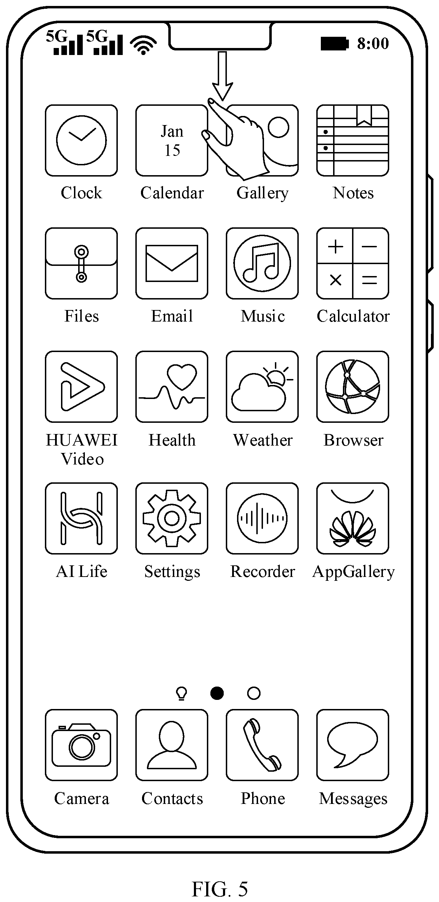

FIG. 5 is a diagram of a home screen of the mobile phone. A user may invoke a control center interface on the home screen of the mobile phone by using a touch operation. The touch operation may be an operation of swiping downward from the top of the home screen by the user, or may be an operation of swiping upward from the bottom of the home screen by the user. The touch operation shown in FIG. 5 is an operation of swiping downward from the top of the home screen by the user. The control center interface may alternatively be invoked in response to a touch operation performed by the user on another interface of the mobile phone. How to invoke the control center interface is not limited in embodiments of this application.

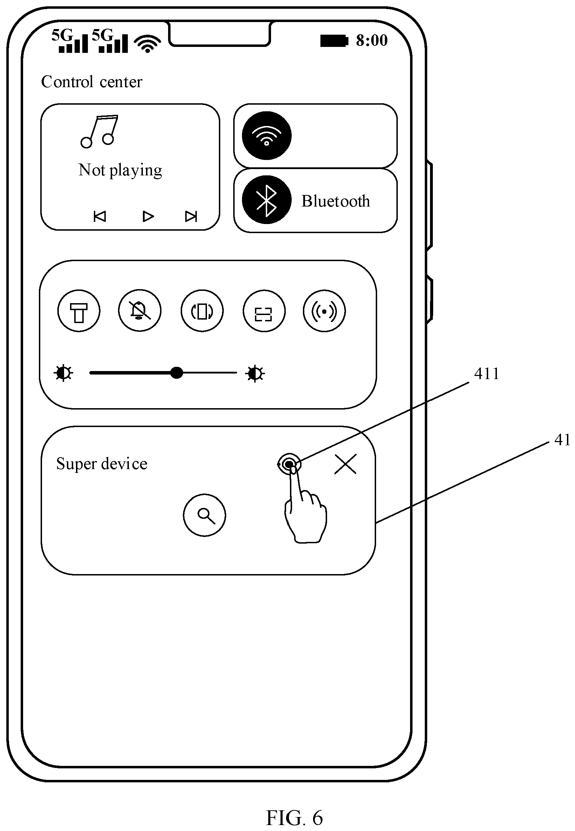

FIG. 6 is a diagram of the control center interface of the mobile phone. As shown in FIG. 6, a plurality of function controls may be displayed in the control center interface, and the function controls may also be referred to as widgets, modules, or the like. The plurality of function controls include a super device function widget 41. As shown in FIG. 6, the user may tap a device collaboration icon 411 in the super device function widget 41, and the mobile phone may enable the device collaboration function in response to the tap operation performed by the user on the device collaboration icon 411. The first user operation includes the tap operation on the device collaboration icon 411. Certainly, the first user operation may alternatively be another trigger operation used to enable the device collaboration function. The first user operation is not specifically limited in embodiments of this application.

According to the device collaboration method provided in this application, after the device collaboration function is enabled on the mobile phone, task collaboration or function transfer between the mobile phone and another device (namely, a device that is discovered by the mobile phone and that is in a same communication group as the mobile phone) can be subsequently implemented, and task collaboration or function transfer between other devices can also be implemented, thereby improving selectivity and convenience of task collaboration or function transfer. For example, content displayed on the mobile phone may be transferred to the Vision for displaying. An account corresponding to the mobile phone and an account corresponding to the Vision may be the same or may be different. For example, content displayed on the computer may be transferred to the Vision for displaying. An account corresponding to the Vision and an account corresponding to the computer may be the same or may be different.

In a feasible implementation, the mobile phone may enable the device collaboration function in response to a tap operation performed by the user on a device collaboration icon; and broadcast a probe request by using a wireless communication function, to probe a device that is around the mobile phone and that is in a same communication group as the mobile phone. At least one device that is around the mobile phone and that is in a same communication group as the mobile phone may include a device that is under a different account from the mobile phone (namely, a different-account device), and a device that is under a same account as the mobile phone (namely, a same-account device). The probe request carries related information of the mobile phone. For example, the related information of the mobile phone may be at least one of identification information of the mobile phone, an account corresponding to the mobile phone, identification information of a communication group corresponding to the mobile phone, and the like. The identification information of the mobile phone is used to uniquely indicate the mobile phone, and the identification information of the communication group corresponding to the mobile phone is used to uniquely indicate the communication group corresponding to the mobile phone. After receiving the probe request, a nearby device (for example, the Vision) may determine, based on the probe request, whether the Vision and the mobile phone belong to a same communication group. When determining that the Vision and the mobile phone belong to the same communication group, the nearby device may generate a probe response, and send the probe response to the mobile phone. The probe response indicates that the Vision and the mobile phone belong to the same communication group. The identification information of the mobile phone may be a universally unique identifier (universally unique identifier, UUID) of the mobile phone or a media access control address (media storage control address, MAC) of the mobile phone. The identification information of the communication group may be a faction identifier (faction identifier, FID) of the communication group.

The wireless communication function includes but is not limited to a wireless communication function implemented by using technologies such as a WLAN, radio frequency identification (radio frequency identification, REID), Wi-Fi, P2P, a hotspot, infrared, an ultrasonic wave, Bluetooth, ZigBee, and ultra-wideband (ultra-wideband, UWB). This is not limited in embodiments.

It may be understood that many wireless communication technologies support a positioning function, for example, a Wi-Fi-based positioning function, a Bluetooth iBeacon-based positioning function, a Bluetooth 5.1-based signal arrival of angle (arrival of angle, AOA) positioning function, and a UWB-based positioning function. This is not limited in embodiments. The Wi-Fi-based positioning function and the Bluetooth iBeacon-based positioning function may be used to measure a distance between the mobile phone and another electronic device. The Bluetooth 5.1-based AOA positioning function and the UWB-based positioning function may be used to measure a distance between the mobile phone and another electronic device and a direction of the another electronic device relative to the mobile phone.

After the mobile phone sends the probe request, for example, if a plurality of devices receive the probe request, each device may determine, based on information carried in the probe request, whether the device and the mobile phone belong to a same communication group. For each device, when determining that a recording module of the device does not have any group information, the device determines that the device (device) and the mobile phone do not belong to a same communication group. When determining that the recording module of the device has group information, the device may match the information carried in the probe request with the group information to obtain a matching result. When the matching result indicates that the information carried in the probe information matches the group information, the device determines that the device and the mobile phone belong to a same communication group, and then may send a probe response to the mobile phone, where the probe response indicates that the mobile phone and the device belong to the same communication group. When the device determines that the device and the mobile phone do not belong to a same communication group, the device may not send any information. When the device determines that the device and the mobile phone do not belong to a same communication group, the device may alternatively send another probe response different from the probe response to the mobile phone. For example, the another probe response may indicate that the mobile phone and the device belong to different communication groups.

The mobile phone may determine, based on the received at least one probe response, at least one device that is around the mobile phone and that is in a same communication group as the mobile phone, and display, to the user in the super device interface, an icon representing the mobile phone and at least one icon representing the at least one device.

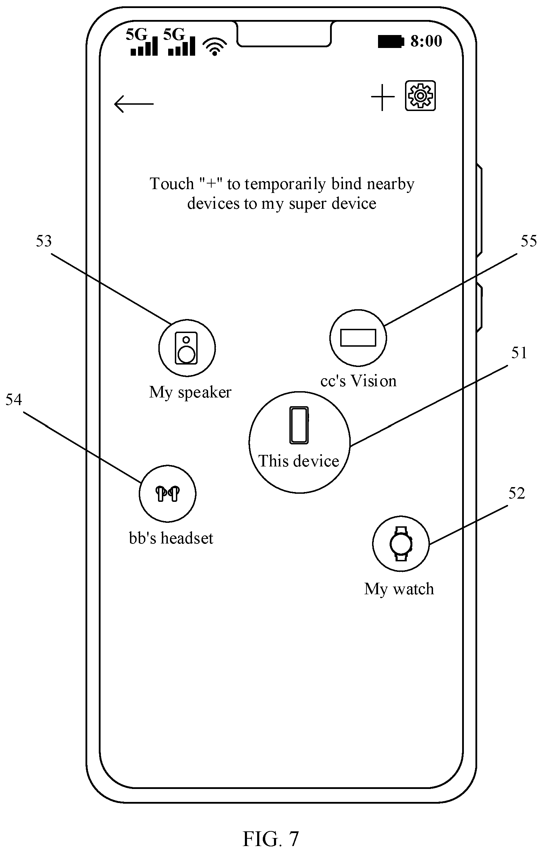

For example, a quantity of the at least one probe response received by the mobile phone may be four, and a quantity of the at least one device that is around the mobile phone and that is in the same communication group as the mobile phone may also be determined as four based on the four probe responses. An account corresponding to the mobile phone may be an account m1. The four devices include a same-account device and a different-account device. The same-account device may be, for example, a speaker and a watch. In other words, an account corresponding to the speaker, an account corresponding to the watch, and the account corresponding to the mobile phone are all the account m1. The different-account device may be, for example, a headset and a Vision. An account corresponding to the headset, an account corresponding to the Vision, and the account corresponding to the mobile phone may be different. For example, the account corresponding to the headset may be an account m2, and the account corresponding to the Vision may be an account m3. As shown in FIG. 7, the mobile phone may display, in the super device interface, an icon 51 representing the mobile phone, an icon 52 representing the watch, an icon 53 representing the speaker, an icon 54 representing the headset, and an icon 55 representing the Vision. A group member corresponding to the headset may be "bb", and a group member corresponding to the Vision may be "cc". In this way, the mobile phone automatically discovers the different-account device and the same-account device, and may display, in the super device interface, an icon representing the different-account device and an icon representing the same-account device, so that the user subsequently establishes a device collaboration link between at least two of the mobile phone, the speaker, the headset, the Vision, and the watch by operating (for example, dragging) the icons shown in FIG. 7, to implement task collaboration or function transfer between the at least two devices.

The group information stored by the recording module of the device is sent by the server to the device. The server stores group information of a plurality of different communication groups, and the communication group may also be referred to as a family group. The communication group may be created by the server based on a received creation request. An internet of things platform (internet of things cloud, IOT) runs on the server, and the internet of things platform includes a group management module and a delivery module. The group management module is configured to create, update, and delete a communication group, and the group management module is also referred to as a family group management module. The group management module is further configured to manage addition and deletion of a group member and maintain group information of a communication group. Maintaining the group information of the communication group may be, for example, maintaining a relationship between the communication group, an account of a group member, and device information (for example, identification information of a device) corresponding to the account.

For each communication group, the delivery module is connected to each device in the communication group, and is configured to deliver group information of the communication group to each device. In other words, a plurality of devices in a same communication group share group information of the communication group.

The server maintains group information of a plurality of communication groups. One communication group includes a plurality of devices (which may be understood as that a first communication group corresponds to a plurality of devices), and the plurality of devices are devices (electronic devices) corresponding to accounts of a plurality of group members. One communication group includes a plurality of group members, and the plurality of group members include a group management member and a common group member. One group member is used to uniquely indicate one user. One group member corresponds to one account, which may be referred to as an account corresponding to the group member, an account of the group member, or a group member account. One account corresponds to at least one device.

One account corresponds to at least one device. When the at least one device means one device, the at least one device is a first device. When the at least one device means a plurality of devices, the at least one device includes a first device and a second device. The first device may be a portable device that has a real-time communication function, a user interface, a notification push service, and a device collaboration function. For example, the first device may be a mobile phone or a computer corresponding to the account. The second device may be a device different from the first device.

For example, based on a usage scenario, the second device may be a device like an office device, a home device, a personal device, or an education device. The office device includes a device like a Vision, a printer, or a projector. The home device may be a device like a TV, a speaker, or an air conditioner. The personal device includes a device like a mobile phone, a tablet computer, or a watch. The education device includes a device like an electronic whiteboard or an intelligent desk.

A communication group q is used as an example. The communication group q corresponds to a plurality of devices. For example, the first electronic device and the at least one second electronic device both belong to the communication group q. The first electronic device and the at least one second electronic device may be all of the plurality of devices in the communication group q, and may also be some of the plurality of devices. For example, the first electronic device may be a first device corresponding to a group management member in the plurality of devices. Certainly, the first electronic device may alternatively be a first device corresponding to a common group member in the plurality of devices. The first device may be specifically a mobile phone. The second electronic device may be a device other than the first electronic device in the plurality of devices. The server may send group information of the communication group q to the plurality of devices in the communication group q. The group information of the communication group q includes identification information of the communication group q, an account of a group member, and identification information of each device corresponding to the account. The server may obtain the group information of the communication group q in the following manner. The identification information of each device corresponding to the account may be presented by using a device list.

In a feasible implementation, the server may send a first query request to a first device corresponding to the group management member of the communication group q, where the first query request is used to query an account of the group management member and identification information of each device corresponding to the account. For each common group member of the communication group q, the server may send a second query request to a first device corresponding to the common group member, where the second query request is used to query an account of the common group member and identification information of each device corresponding to the account. Then, the server may combine information sent based on the first query request by the first device corresponding to the group management member, information sent based on the second query request by the first device corresponding to the common group member, and the identification information of the communication group q, to obtain the group information of the communication group q.

The first query request and the second query request may be periodically sent by the server. Certainly, the first query request and the second query request may alternatively be sent by the server when the server detects that a group member of the communication group changes. In this way, timeliness and effectiveness of obtaining the group information by the server can be improved.

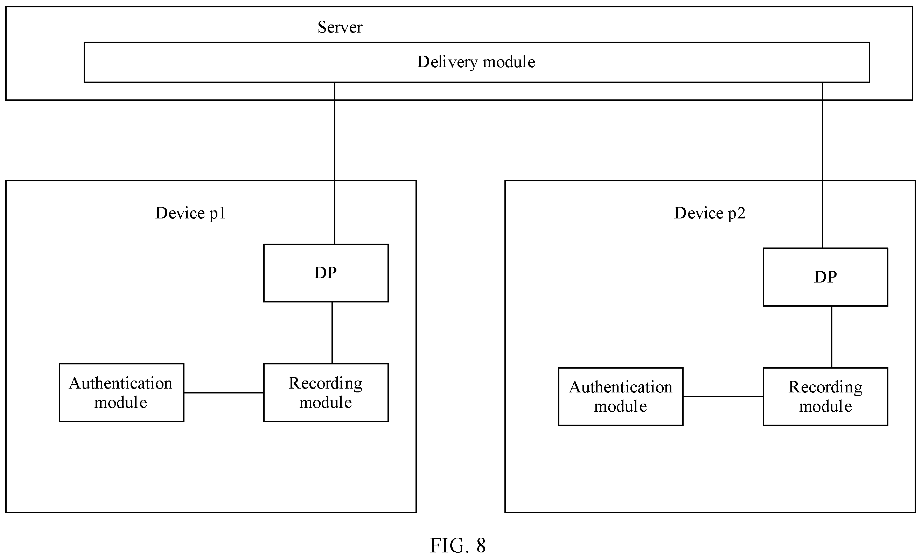

As shown in FIG. 8, after obtaining group information of a communication group, a server may send the group information to a plurality of devices in the communication group in real time or periodically through a delivery module. In FIG. 8, an example in which a quantity of the plurality of devices in the communication group is two and the plurality of devices are respectively a device p1 and a device p2 is used for illustration. As shown in FIG. 8, the device p1 includes a recording module and an authentication module. The device p1 may receive the group information from the server, and verify the group information by using a device profile (device profile, DP) on the device p1. When the group information conforms to a profile definition, the group information is transmitted to the recording module on the device p1, and the recording module may store the group information. After receiving a probe request from another device, the device p1 may determine, based on the probe request and the stored group information, whether the device p1 and the another device are in a same communication group. Similarly, the device p2 also includes a recording module and an authentication module. The device p2 may receive the group information from the server, and verify the group information by using a DP on the device p2. When the group information conforms to a profile definition, the group information is transmitted to the recording module on the device p2, and the recording module may store the group information. After receiving a probe request from another device, the device p2 may determine, based on the probe request and the group information, whether the device p2 and the another device are in a same communication group. In this way, another device can automatically discover the device p1 and the device p2.

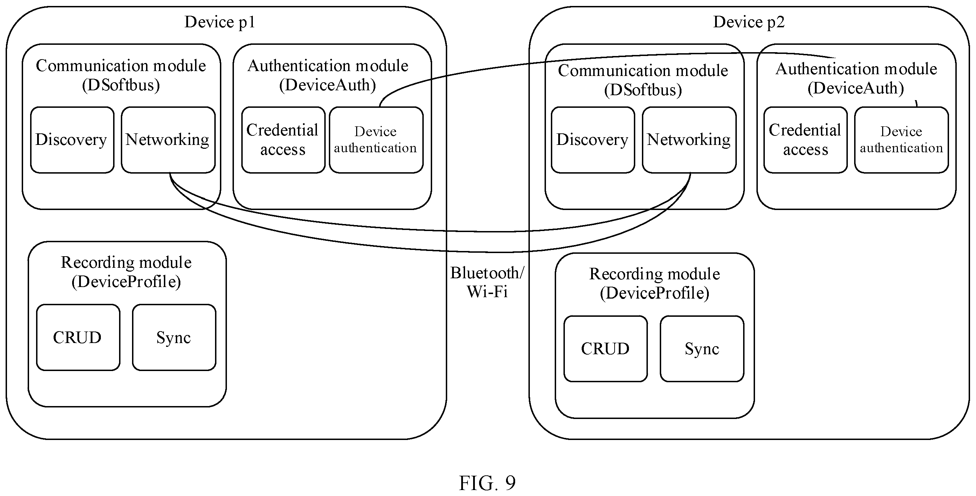

As shown in FIG. 9, the device p1 and the device p2 each may further have a communication module. The device p1 and the device p2 may be networked in a wireless manner, and the wireless manner may be Bluetooth or Wi-Fi. The authentication module of the device p1 further stores authentication information corresponding to the device p1, and the authentication module of the device p2 further stores authentication information corresponding to the device p2. When task collaboration or function transfer needs to be performed between the device p1 and the device p2, before a device collaboration link between the device p1 and the device p2 is established, the device p1 may determine, based on the stored authentication information corresponding to the device p1, whether the device p2 is an authorized device. Similarly, the device p2 may determine, based on the stored authentication information corresponding to the device p2, whether the device p1 is an authorized device. The device collaboration link is established when both devices are authorized devices. The authentication information corresponding to the device p1 may be key information corresponding to the device p1, and the key information includes a group identifier key corresponding to the device p1 and a user identifier key corresponding to the device p1. The authentication information corresponding to the device p2 may be key information corresponding to the device p2, and the key information includes a group identifier key corresponding to the device p2 and a user identifier key corresponding to the device p2. The device p1 and the device p2 belong to a same communication group, and the group identifier key corresponding to the device p1 is the same as the group identifier key corresponding to the device p2.

When the group information stored in a group management module of the server is updated, an update instruction is also delivered to the device p1 and the device p2. The recording module in the device p1 may update, based on the update instruction, the group information stored in the recording module, and the recording module in the device p2 may update, based on the update instruction, the group information stored in the recording module. The update instruction carries new group information.

In embodiments of this application, a device running the AI Life app may send, to a server, a creation request used to create a communication group, and the server creates the communication group in response to the creation request. The device running the AI Life app may be, for example, a mobile phone. The communication group may be referred to as a family group. After the communication group is created, the device running the AI Life app may send, to the server, a query instruction for querying group information corresponding to the communication group, to obtain the group information of the communication group from the server.

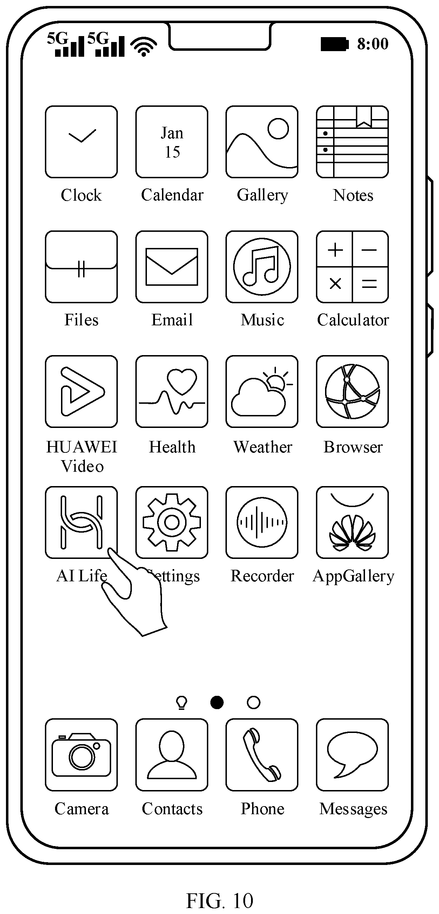

An icon of the AI Life app is displayed in a UI of the mobile phone. As shown in FIG. 10, a user may tap the icon of the AI Life app, and the mobile phone runs the AI Life app in response to the tap operation performed by the user on the "icon of the AI Life app". The user may tap a widget "New home" in the UI of the AI Life app. The mobile phone generates a creation request in response to the tap operation performed by the user on "New home", and sends the creation request to the server. The server may create a family group based on the creation request. After creating the family group, the server may return a creation response to the creation request to the mobile phone. The creation response indicates that the family group is successfully created. Then, the mobile phone may display the created family group to the user based on the creation response. The user may trigger, in the UI of AI Life, an operation of adding or deleting a family member (namely, a group member).

With reference to the accompanying drawings, the following describes an example of adding a group member to the family group.

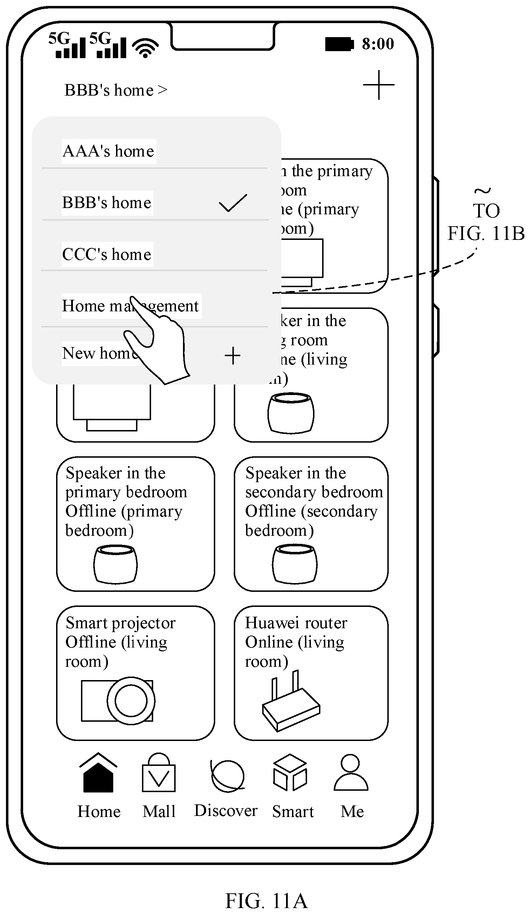

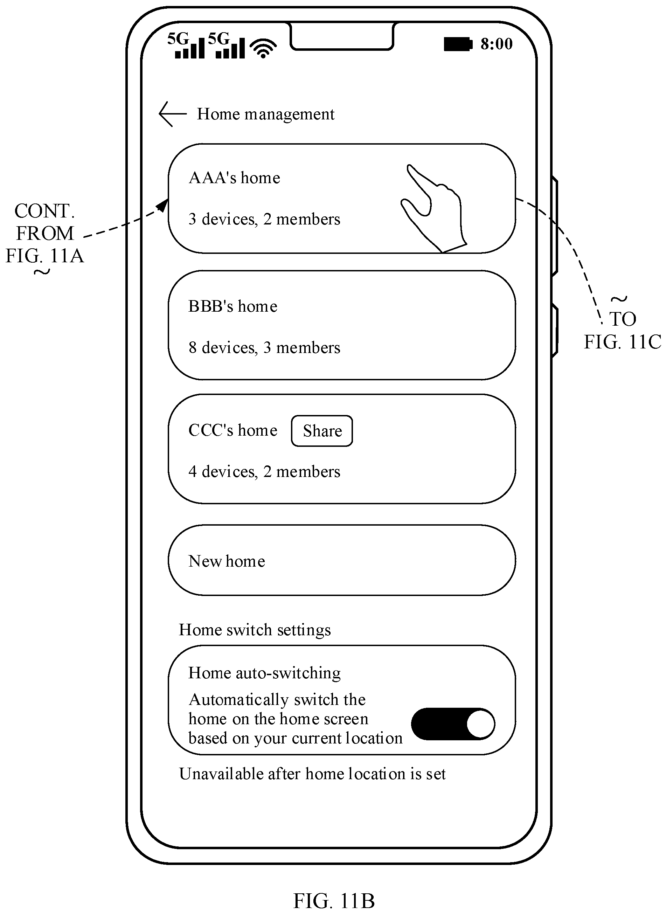

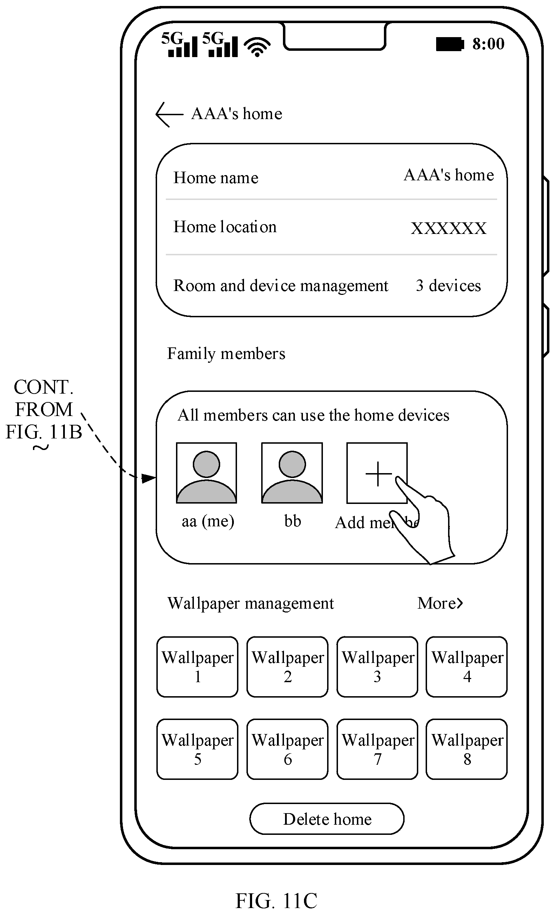

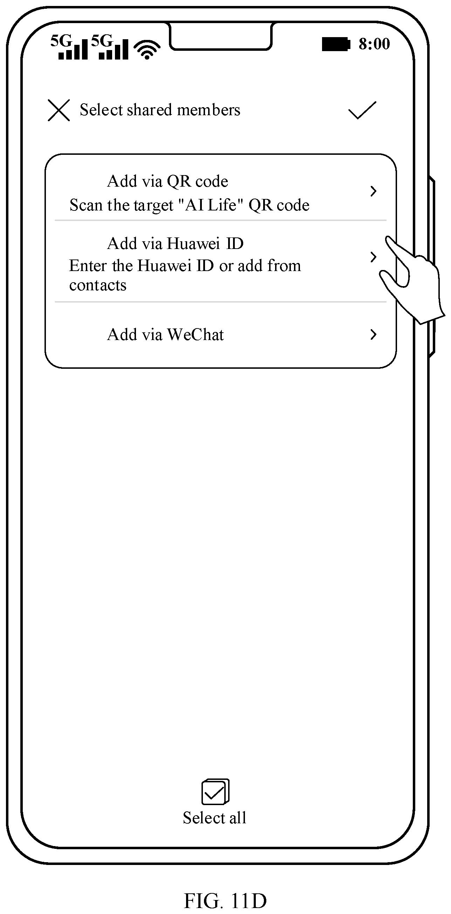

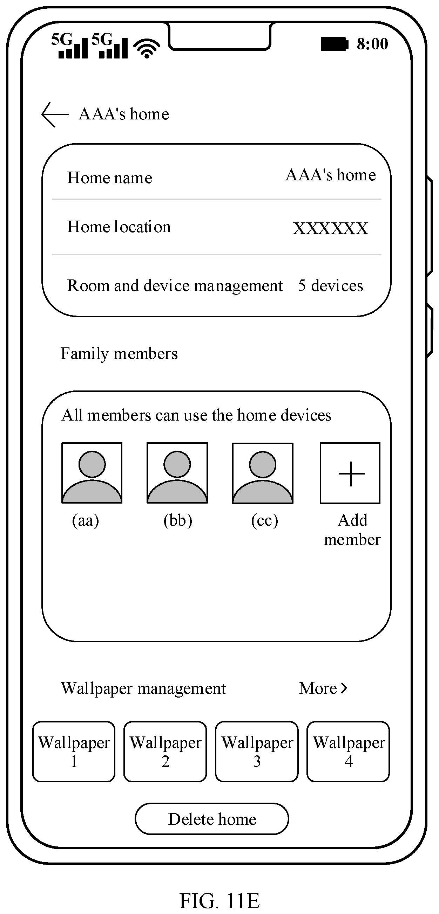

As shown in FIG. 11A, the user may tap a widget "Home management" in the UI interface of the AI Life app to enter a home management interface shown in FIG. 11B. As shown in FIG. 11B, a plurality of family groups to which an account corresponding to the mobile phone belongs are displayed in the home management interface, and the plurality of family groups means three family groups, which are respectively "AAA's home", "BBB's home", and "CCC's home". The user may select any family group from the plurality of family groups to perform group member management. As shown in FIG. 11B, the user may tap a widget "AAA's home" to enter an "AAA's home" interface shown in FIG. 11C. As shown in FIG. 11C, detailed information of "AAA's home" is displayed in the "AAA's home" interface, for example, a home name, a home location, room and device management, and family members (group members) of "AAA's home" are displayed. There are two family members in "AAA's home", and the two family members are respectively a family member "aa" corresponding to the mobile phone and another family member "bb". As shown in FIG. 11C, the user may tap a widget "Add member" to enter an interface for selecting a manner of "Add member" shown in FIG. 11D, and the user may select any adding manner from a plurality of displayed adding manners to add a family member. As shown in FIG. 11D, the user may tap a widget "Add via Huawei ID" to add a new member, for example, "cc". After the member is successfully added, as shown in FIG. 11E, family members "aa" and "bb", and the new family member "cc" may be displayed in the family members of "AAA's home". When a group management member (namely, a family administrator like aa) removes a family member, the group management member can directly remove the family member without consent of the family member. Each family member is used to uniquely indicate a user.

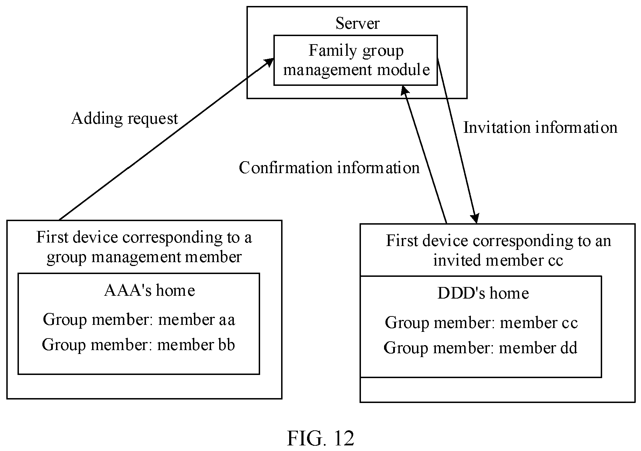

When the user (namely, the user indicated by the group management member) selects any adding manner to add the member "cc" to "AAA's home", a first device corresponding to the group management member, for example, a mobile phone, generates, in response to an adding operation of the user, an adding request used to add the family member "cc", and sends the adding request to the server, so as to add the member "cc" to "AAA's home". An account corresponding to the mobile phone may be an account m1, and an account of the member cc is an account m3. As shown in FIG. 12, the mobile phone may send the adding request to the server, and the server may generate, in response to the adding request by using a group management module (a family group management module), invitation information used to invite the member cc to join "AAA's home", and send, by using a push service (push notification), the invitation information to a first device corresponding to the invited member cc (for example, a terminal that runs the AI Life app and that corresponds to the invited member cc). After receiving the invitation information, the first device corresponding to the invited member cc displays the invitation information. When a confirmation operation performed by a user indicated by the invited member cc on the invitation information is detected, confirmation information may be generated, where the confirmation information indicates that the user agrees to join "AAA's home", and the confirmation information is sent to the server. After receiving the confirmation information, the server may add the invited member cc to "AAA's home" based on the confirmation information, and update group information of "AAA's home" stored in the group management module. The updated group information includes identification information of "AAA's home", an account m1 of the member aa and identification information of each device corresponding to the account m1, an account m2 of the member bb and identification information of each device corresponding to the account m2, and an account m3 of the member cc and identification information of each device corresponding to the account m3.

For example, the account m1 of the member aa is bound to (corresponds to) two devices, the account m2 of the member bb is bound to one device, and the account m3 of the member cc is bound to two devices, that is, "AAA's home" corresponds to 2+1+2=5 devices. The server may send the updated group information to each of the five devices. After receiving the group information, each device may store the group information in a recording module of the device, so that each device subsequently determines, based on the stored group information and a probe request sent by another device, whether the device and the another device are in a same family group, to implement automatic discovery of devices in the same family group.

In embodiments of this application, the first electronic device may be, for example, a mobile phone. The mobile phone may display, in a super device interface to the user, an icon representing the mobile phone and an icon representing at least one device that is around the mobile phone and that is in a same communication group as the mobile phone. The user may select a to-be-collaborated device and a collaboration device from the mobile phone and the at least one device by dragging the icon displayed in the super device interface, to establish a device collaboration link between the to-be-collaborated device and the collaboration device.

The to-be-collaborated device may be the mobile phone, and the collaboration device may be a device in the at least one device. The to-be-collaborated device may be a device in the at least one device, and the collaboration device may be the mobile phone. When the at least one device means a plurality of devices, both the to-be-collaborated device and the collaboration device may be devices in the at least one device. The user may drag an icon n1 displayed in the super device interface to a specified area corresponding to an icon n2; or drag the icon n1 to partially or completely overlap the icon n2. A device corresponding to the icon n1 may serve as the to-be-collaborated device, and a device corresponding to the icon n2 may serve as the collaboration device. In other words, a device corresponding to the dragged icon is the to-be-collaborated device.

In a feasible implementation, the mobile phone may generate, in response to a drag operation of the user, a processing request used to establish the device collaboration link between the to-be-collaborated device and the collaboration device, and send the processing request to the server. After receiving the processing request, the server may generate a control instruction based on the processing request, where the control instruction is used to control the to-be-collaborated device to establish the device collaboration link, and send the control instruction to the to-be-collaborated device. Certainly, the control instruction may alternatively be an instruction used to control the collaboration device to establish the device collaboration link. In this case, the server may send the control instruction to the collaboration device. The following uses an example in which the control instruction is an instruction used to control the to-be-collaborated device to establish the device collaboration link, and the server sends the control instruction to the to-be-collaborated device for description.

The server may send the control instruction to the to-be-collaborated device, where the control instruction is used to control the to-be-collaborated device to establish the device collaboration link. After receiving the control instruction, the to-be-collaborated device may send a verification request to the collaboration device in response to the control instruction, where the verification request is used by the collaboration device to determine whether the to-be-collaborated device is an authorized device. After receiving the verification request, the collaboration device sends a verification response to the to-be-collaborated device when determining, based on the verification request, that the to-be-collaborated device is the authorized device, where the verification response is used by the to-be-collaborated device to determine whether the collaboration device is an authorized device. After the to-be-collaborated device receives the verification response, when the to-be-collaborated device determines, based on the verification response, that the collaboration device is the authorized device, the to-be-collaborated device may establish the device collaboration link between the to-be-collaborated device and the collaboration device through a distributed soft bus. Through the device collaboration link, the collaboration device may transfer a task to the to-be-collaborated device for processing by using a capability of the to-be-collaborated device, thereby improving user experience. With reference to an application scenario, the following describes an example of establishing the device collaboration link between the to-be-collaborated device and the collaboration device and performing task collaboration through the device collaboration link.

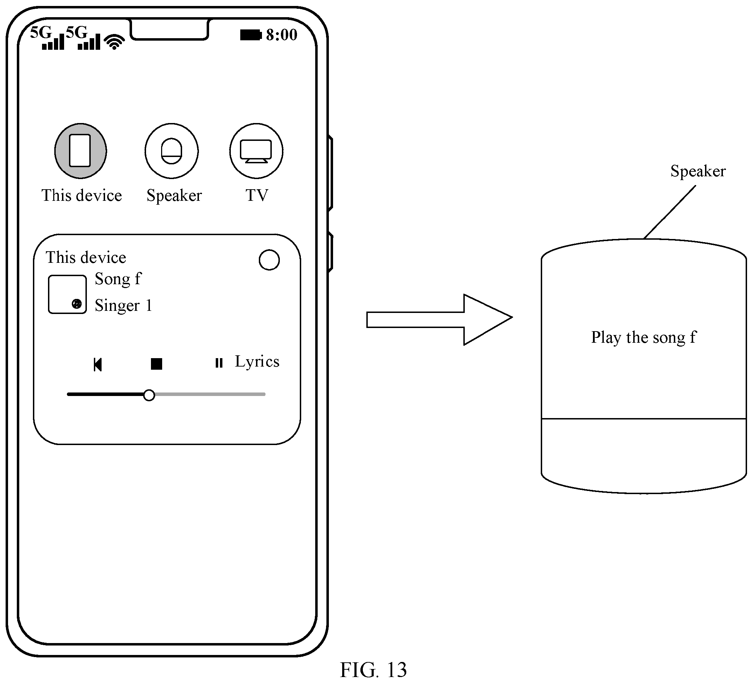

In a scenario of task collaboration between a mobile phone and a speaker, the user may drag the icon 53 shown in FIG. 7 to partially or completely overlap the icon 51, to establish a device collaboration link between the mobile phone and the speaker. The speaker is a to-be-collaborated device, and the mobile phone is a collaboration device. As shown in FIG. 13, the mobile phone is playing a song f. After the device collaboration link between the mobile phone and the speaker is established, the song f played on the mobile phone may be transferred to the speaker for playing. Certainly, the user may alternatively drag, in the super device interface of the mobile phone, the icon 51 shown in FIG. 7 to partially or completely overlap the icon 53, to establish a device collaboration link between the mobile phone and the speaker. The mobile phone is a to-be-collaborated device, and the speaker is a collaboration device. For example, if a song g is played on the speaker, after the device collaboration link between the mobile phone and the speaker is established, the song g played on the speaker may be transferred to the mobile phone for playing.

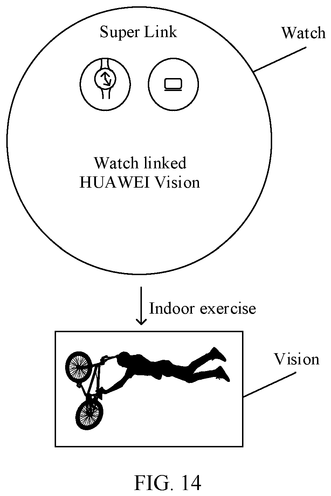

In a scenario of task collaboration between a watch and a Vision, the user may drag the icon 55 shown in FIG. 7 to partially or completely overlap the icon 52, to establish a device collaboration link between the watch and the Vision. The Vision is a to-be-collaborated device, and the watch is a collaboration device. For example, when the watch determines, based on information such as a heartbeat and blood pressure of the user, that the user is in a running scenario, the watch may transmit the information such as the heartbeat and blood pressure to the Vision for displaying. As shown in FIG. 14, when the watch determines, based on information such as a heartbeat and blood pressure of the user, that the user is in a running scenario, the watch may alternatively link the Vision to play a video related to an exercise scenario.

Certainly, when the collaboration device does not support some functions, a function that is not supported by the collaboration device may be implemented with support of the to-be-collaborated device through the device collaboration link between the to-be-collaborated device and the collaboration device, to better complete a corresponding service or task. This can not only improve life or work efficiency, but also enhance comfort, security, and convenience for the user. For example, in a scenario of task collaboration between a mobile phone and a printer, the collaboration device is the mobile phone, the to-be-collaborated device is the printer, and the mobile phone does not support a printing function. When an icon of the printer is displayed in the super device interface, the icon of the printer may be dragged to partially or completely overlap an icon of the mobile phone, to establish a device collaboration link between the printer and the mobile phone. Then, the mobile phone may automatically transfer a file to the printer for printing, thereby improving user experience.

In the foregoing solution, an icon displayed in the super device interface is dragged to establish a device collaboration link between devices in a same family group, and task collaboration or function transfer between the devices is implemented through the device collaboration link. This expands an optional range of devices required for task collaboration, improves device selectivity and flexibility during task collaboration, and improves user experience, thereby resolving problems in a related technology that selectivity and user experience are poor when task collaboration or function transfer can be performed only between same-account devices.

When the first electronic device is a collaboration device, the collaboration device can automatically discover a target device existing in a current environment, and then may use, based on a user operation, the target device as a to-be-collaborated device, to implement task collaboration or function transfer between the collaboration device and the to-be-collaborated device. An effect of processing a task by the target device may be better than an effect of processing the task by the collaboration device, and the task may be a task that needs to be processed by the collaboration device.

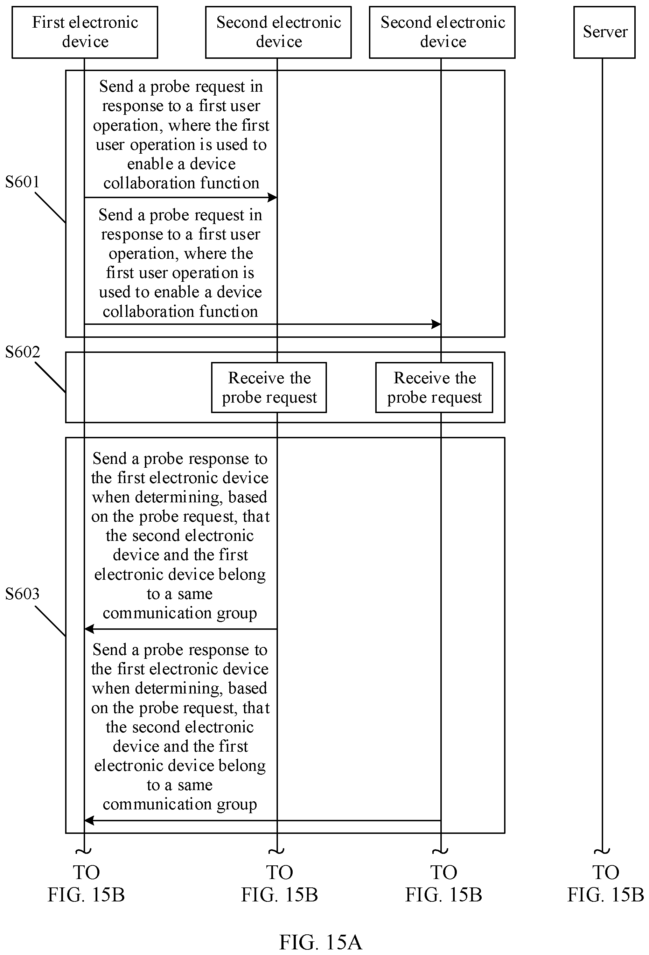

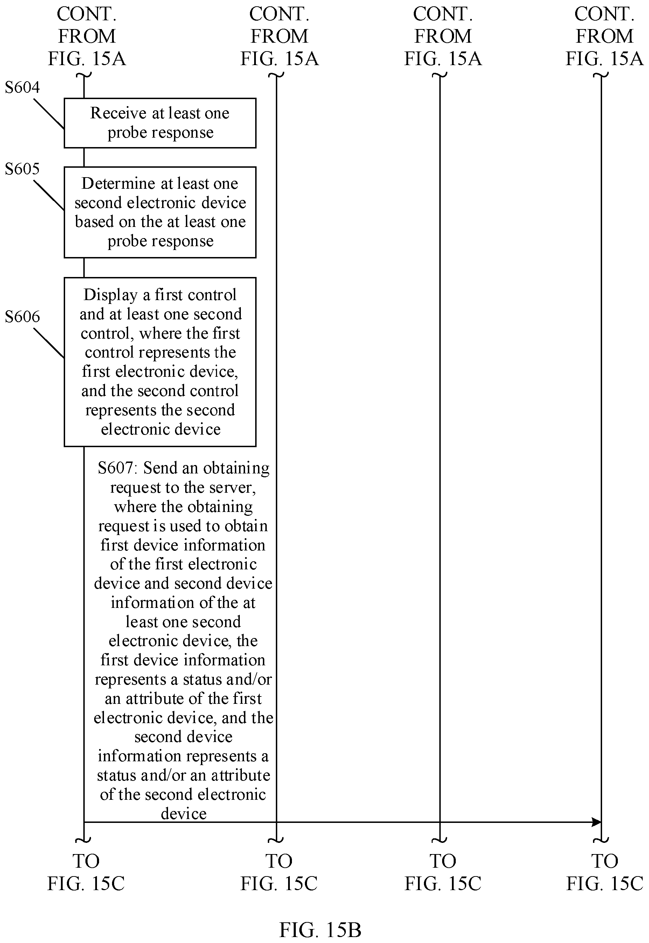

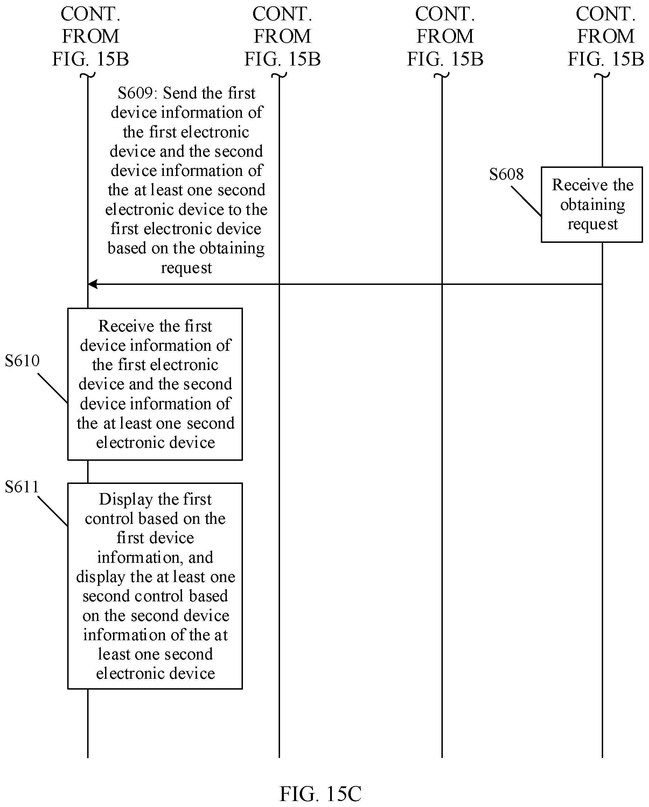

FIG. 15A to FIG. 15C are a schematic flowchart of a device collaboration method according to an embodiment of this application. The method is applied to a device collaboration system. The following describes in detail the device collaboration method provided in this embodiment of this application by using an example in which a quantity of at least one second electronic device is two. As shown in FIG. 15A to FIG. 15C, the device collaboration method includes S601 to S606; or the device collaboration method includes S601 to S605 and S607 to S611. The following describes the device collaboration method in detail.

S601: A first electronic device sends a probe request in response to a first user operation, where the first user operation is used to enable a device collaboration function.

The first electronic device is a device having the device collaboration function, and the probe request is used to discover a device around the first electronic device.

In this embodiment of this application, the first user operation is an operation used to enable the device collaboration function. When detecting the first user operation, the first electronic device may enable the device collaboration function in response to the first user operation, and then send the probe request.

For example, a super device function widget is displayed in a display interface of the first electronic device, and the first user operation may be a tap operation performed by a user on the super device function widget, or may be a tap operation performed on a device collaboration icon (widget) in the super device function widget.

The probe request may be sent through broadcast by using a wireless communication function. The probe request may be specifically used to probe a device that is around the first electronic device and that is in a same communication group as the first electronic device. The device around the first electronic device may be understood as a device that is in a same network as the first electronic device or a device whose distance from the first electronic device is less than a target distance threshold. For example, the target distance threshold may be 10 meters.

The probe request carries related information of the first electronic device, and the related information includes at least one of identification information of the first electronic device, an account corresponding to the first electronic device, and group identification information corresponding to the first electronic device. The identification information of the first electronic device is used to uniquely indicate the first electronic device. For example, the identification information of the first electronic device may be a unique device identifier (unique device identifier, UDID) or a MAC of the first electronic device. The group identification information corresponding to the first electronic device may be understood as identification information of a communication group corresponding to the first electronic device (namely, a communication group to which the first electronic device belongs), and the group identification information may be, for example, an FID.

For example, the first electronic device may be specifically a device like a mobile phone, glasses, a tablet computer, a PC, a Vision, a watch, a speaker, a head unit, a headset, a printer, a projector, or a floor sweeper.

S602: A second electronic device receives the probe request from the first electronic device.

In this embodiment of this application, the second electronic device may receive the probe request through a listening interface. The second electronic device may perform the following operations based on the probe request.

In a feasible implementation, the second electronic device may determine, based on stored group information and the probe request, whether to send a first probe response or a second probe response to the first electronic device. When determining, based on the probe request, that the second electronic device and the first electronic device belong to a same communication group, the second electronic device may send the first probe response to the first electronic device, where the first probe response indicates that the first electronic device and the second electronic device belong to the same communication group. When determining, based on the stored group information and the probe request, that the first electronic device and the second electronic device do not belong to a same communication group, the second electronic device may send the second probe response to the first electronic device, where the second probe response indicates that the first electronic device and the second electronic device do not belong to the same communication group.

In another feasible implementation, the second electronic device may determine, based on stored group information and the probe request, whether to send a probe response to the first electronic device. When determining, based on the probe response, that the second electronic device and the first electronic device belong to a same communication group, the second electronic device may send the probe response to the first electronic device, where the probe response indicates that the first electronic device and the second electronic device belong to the same communication group. The probe response may be the first probe response. When determining, based on the stored group information and the probe request, that the second electronic device and the first electronic device do not belong to a same communication group, the second electronic device may not send any information to the first electronic device.

Information carried in the probe request may be matched with the stored group information to obtain a matching result. When the matching result indicates that the information carried in the probe request matches the stored group information, it is determined that the second electronic device and the first electronic device belong to a same communication group. The group information includes at least one of identification information of a communication group corresponding to the second electronic device (namely, group identification information corresponding to the second electronic device), an account of a group member of the communication group corresponding to the second electronic device (namely, a group member account), and identification information of an electronic device corresponding to the account of the group member. The identification information of the communication group corresponding to the second electronic device is used to uniquely indicate the communication group corresponding to the second electronic device, and the identification information of the communication group corresponding to the second electronic device may be, for example, an FID of the communication group corresponding to the second electronic device. The identification information of the electronic device is used to uniquely indicate the electronic device, and the identification information of the electronic device corresponding to the account of the group member may be a UDID of the electronic device. There are a plurality of group members, and each group member corresponds to one account.

For example, the group information stored in the second electronic device includes the FID of the communication group corresponding to the second electronic device, the account (for example, a Huawei ID) of the group member of the communication group corresponding to the second electronic device, and a UDID of an electronic device corresponding to the account. There are a plurality of accounts of the group member. The related information of the first electronic device carried in the probe request may be, for example, a UDID of the first electronic device. When the UDID of the first electronic device matches a UDID of an electronic device corresponding to an account of a group member stored in the second electronic device (that is, the UDID of the electronic device corresponding to the group member includes the UDID of the first electronic device), it is determined that the first electronic device and the second electronic device belong to a same communication group.

The group information stored in the second electronic device may be sent by a server to the second electronic device. The server may maintain group information of each communication group. For each communication group, the server may deliver, in real time or periodically, the group information of the communication group to each electronic device corresponding to an account of a group member of the communication group (which may also be referred to as each electronic device corresponding to the communication group). When a group member joins or exits the communication group, or an electronic device corresponding to an account of a group member joins or exits, the server may update the group information of the communication group.

A communication group s is used as an example. The communication group s includes, for example, three group members, and accounts of the three group members are respectively a Huawei ID u1, a Huawei ID u2, and a Huawei ID u3. Electronic devices corresponding to the Huawei ID u1 may be a mobile phone and a Vision, electronic devices corresponding to the Huawei ID u2 may be a watch and a speaker, and electronic devices corresponding to the Huawei ID u3 may be a headset and a projector. The server may send, in real time or periodically, group information corresponding to the communication group s to the mobile phone, the Vision, the watch, the speaker, the headset, and the projector. The group information corresponding to the communication group s includes an FID of the communication group s, the Huawei ID u1, the Huawei ID u2, the Huawei ID u3, a UDID of the mobile phone, a UDID of the Vision, a UDID of the watch, a UDID of the speaker, a UDID of the headset, and a UDID of the projector. When a new group member needs to be added, an account of the new group member, for example, a Huawei ID u4, may be added to the group information of the communication group s, and a UDID of each electronic device corresponding to the Huawei ID u4 is also added to the group information of the communication group s, to update the group information of the communication group s. When a group member needs to be deleted, if an account of the group member is, for example, the Huawei ID u3, the Huawei ID u3, the UDID of the headset corresponding to the Huawei ID u3, and the UDID of the projector corresponding to the Huawei ID u3 may be deleted from the group information corresponding to the communication group s, to update the group information. The first electronic device may be the mobile phone, and the second electronic device may be a device in the Vision, the watch, the speaker, the headset, and the projector.

S603: The second electronic device sends the probe response to the first electronic device when determining, based on the probe request, that the second electronic device and the first electronic device belong to the same communication group.

The probe response indicates that the first electronic device and the second electronic device belong to the same communication group, and at least a part of electronic devices in the communication group correspond to different accounts.

The probe response in S603 may be the first probe response in the specific implementation process of S602.

S604: The first electronic device receives at least one probe response to the probe request.

The probe response in S604 may be the first probe response in the specific implementation process of S602.

S605: The first electronic device determines at least one second electronic device based on the at least one probe response.

The first electronic device and the at least one second electronic device belong to a same communication group, an account corresponding to a part or all of the at least one second electronic device is different from an account corresponding to the first electronic device, and the probe response indicates that the first electronic device and the second electronic device belong to the same communication group. The probe response in S605 may be the first probe response in the specific implementation process of S602.

In a feasible implementation, accounts corresponding to the at least one second electronic device are different from the account of the first electronic device, in other words, the at least one second electronic device is a different-account device.

In another feasible implementation, the accounts corresponding to the at least one second electronic device include the account corresponding to the first electronic device and an account different from the account corresponding to the first electronic device, in other words, the at least one second electronic device includes a different-account device and a same-account device.

In this embodiment of this application, a quantity of the at least one probe response is the same as a quantity of the at least one second electronic device. The first electronic device may determine a corresponding second electronic device based on a received probe response.

In a feasible implementation, the probe response includes identification information of the same communication group to which the first electronic device and the second electronic device belong and identification information of the second electronic device.

For example, the first electronic device is a mobile phone. After the mobile phone enables a device collaboration function, the mobile phone discovers a device that belongs to a same family group as the mobile phone in a Bluetooth or Wi-Fi range.

It should be noted that S606 or 607 to S611 may be performed after S605.

S606: The first electronic device displays a first control and at least one second control.

In this embodiment of this application, the first electronic device may send, to the server, a control obtaining request used to obtain the first control and the at least one second control. The server may obtain the first control and the at least one second control based on the control obtaining request, and send the first control and the at least one second control to the first electronic device. The first control and the at least one second control may be generated by the server, and may also be sent by another device to the server. The first electronic device may alternatively determine, from a plurality of pre-stored controls, a control corresponding to the identification information of the first electronic device, to obtain the first control; and determine, from the plurality of pre-stored controls, a control corresponding to identification information of each second electronic device, to obtain the at least one second control.

After obtaining the first control and the second control, the first electronic device may display the first control and the at least one second control in the super device interface, so that the user subsequently selects a corresponding device for task collaboration or function transfer based on the displayed first control and second control. This expands an optional range of devices for task collaboration or function transfer, and further improves user experience.

S607: Send an obtaining request to the server, where the obtaining request is used to obtain first device information and second device information of the at least one second electronic device.

The first device information represents a status and/or an attribute of the first electronic device; and the second device information represents a status and/or an attribute of the second electronic device. The obtaining request carries the identification information of the first electronic device and identification information of the at least one second electronic device.

In a feasible implementation, the first device information includes at least one of model information, configuration information, status information, and size information of the first electronic device, an image of the first electronic device, and the like. The second device information may include at least one of model information, configuration information, status information, and size information of the second electronic device, and an image of the second electronic device.

S608: The server receives the obtaining request from the first electronic device.

S609: The server sends the first device information and the second device information of the at least one second electronic device to the first electronic device based on the obtaining request.

The first device information represents a status and/or an attribute of the first electronic device, and the second electronic information represents a status and/or an attribute of the second electronic device.

In this embodiment of this application, the server may invoke the first device information of the first electronic device and the second device information of the at least one second electronic device from a plurality of pieces of stored device information based on the identification information of the first electronic device and the identification information of the at least one second electronic device in the obtaining request. The first device information and the second device information of the at least one second electronic device may be sent by another device to the server, or may be downloaded by the server from a network.

S610: The first electronic device receives the first device information and the second device information of the at least one second electronic device from the server.

S611: The first electronic device displays the first control based on the first device information, and displays the at least one second control based on the second device information of the at least one second electronic device.

In this embodiment of this application, the first electronic device may generate the first control based on the first device information, and generate, for each second electronic device, the second control based on the second device information of the second electronic device. Certainly, alternatively, the first control corresponding to the first device information may be determined from the pre-generated controls, and the second control corresponding to each second device information may be determined from the pre-generated controls. After the first control and the at least one second control are obtained, the first control and the at least one second control may be displayed in the super device interface.

For example, the first electronic device is a mobile phone. As shown in FIG. 7, the first control may be the icon 51 representing the mobile phone in FIG. 7. The second control may be an icon representing a device that is around the mobile phone and that is in a same communication group as the mobile phone. A quantity of the at least one second control may be four, and the at least one second control may be the icon 52 representing the watch, the icon 53 representing the speaker, the icon 54 representing the headset, and the icon 55 representing the Vision in FIG. 7.

An embodiment of this application provides a device collaboration method. After a first electronic device enables a device collaboration function, the first electronic device may automatically discover at least one second electronic device in a same family group, for example, a second electronic device corresponding to a different account and a second electronic device corresponding to a same account. This expands a range of automatic discovery of devices, and improves an automatic discovery capability of the first electronic device. Subsequently, a user may select, based on a requirement, a corresponding device from the automatically discovered devices for task collaboration or function transfer. This expands an optional range of devices required for task collaboration or function transfer, and improves user experience. The user does not need to manually bind the second electronic device under a different account to the first electronic device. This avoids problems of complex operations, waste of a large amount of time, and impact on user experience in a binding process.

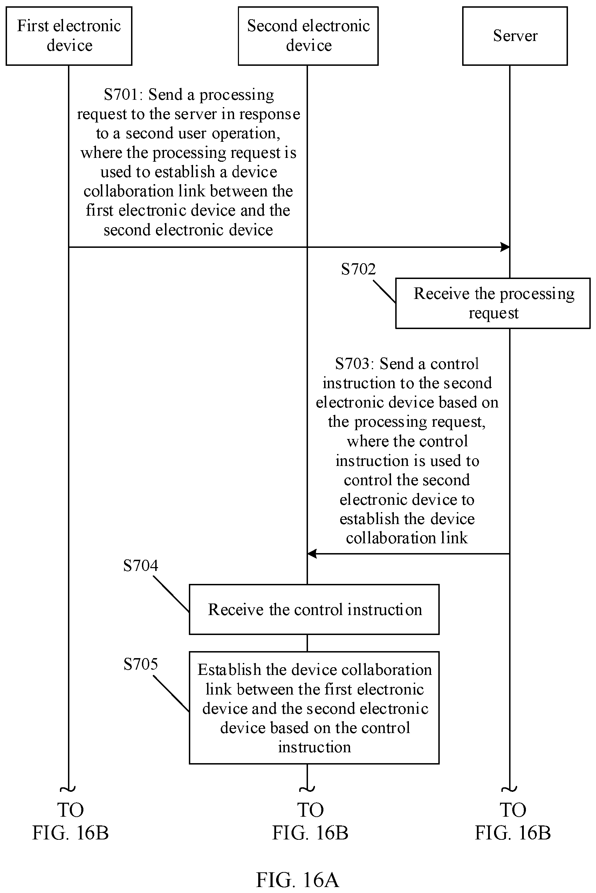

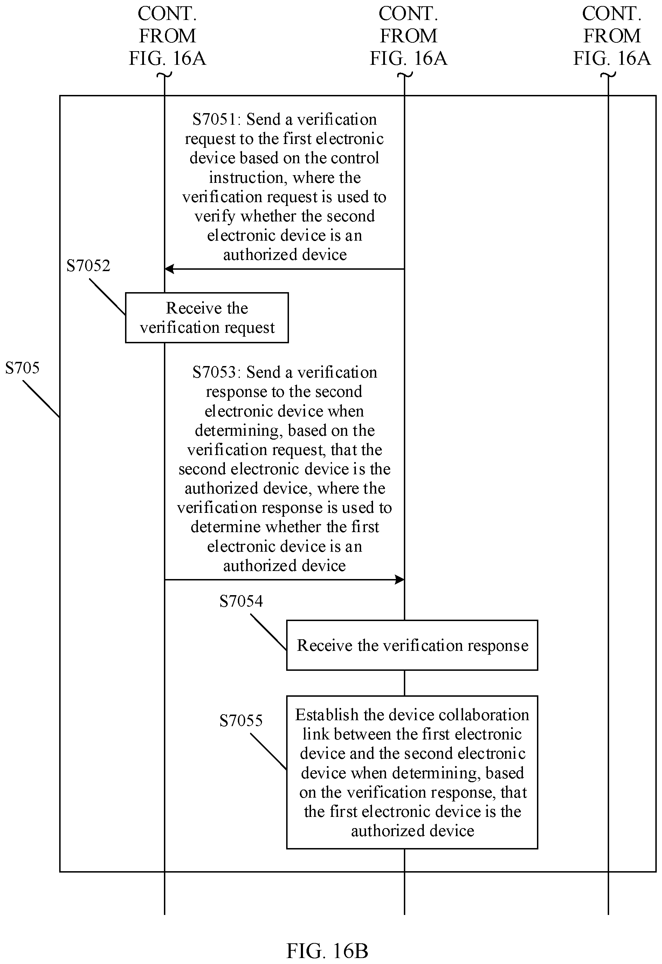

FIG. 16A and FIG. 16B are a schematic flowchart of the device collaboration method according to this embodiment of this application. The device collaboration method may be applied after a first control and at least one second control are displayed. For example, the device collaboration method may be applied after S606 or S611 in the foregoing embodiment, and may also be applied after a first control and at least one second control are displayed by using another method. It should be understood that the device collaboration method provided in FIG. 16A and FIG. 16B is shown by using an example in which the first electronic device is a collaboration device and any one of the at least one second electronic device is a to-be-collaborated device. The device collaboration method may include S701 to S705. The following describes the steps in detail.

S701: The first electronic device sends a processing request to a server in response to a second user operation.

The processing request is used to establish a device collaboration link between the first electronic device and the second electronic device. The device collaboration link is used for task collaboration between the first electronic device and the second electronic device. The first electronic device is a collaboration device, and the second electronic device is a to-be-collaborated device. The second user operation is used to associate the first electronic device with the second electronic device.

In a feasible implementation, the second user operation may be a user operation performed on the second control. For example, the user presses and holds the second control and drags the second control close to the first control, and releases the second control when the second control reaches a specified area corresponding to the first control. The first control represents the first electronic device, and the second control represents the second electronic device. The dragged first control partially or completely overlap the second control.

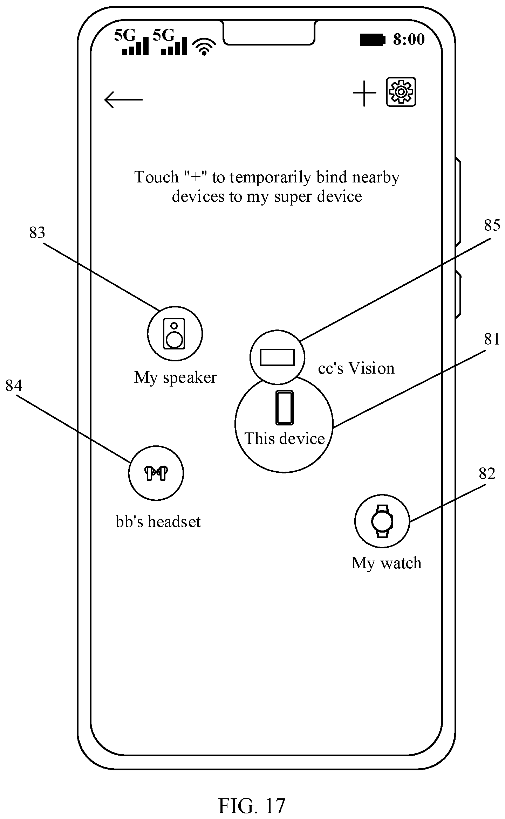

The first electronic device may be a mobile phone, and the second electronic device may be a Vision. As shown in FIG. 17, the first control may be an icon 81 representing the mobile phone, the second control may be an icon 85 representing the Vision, and the second user operation may be that the user presses and holds the icon 85 and drags the icon 85 to partially overlap the icon 81. The mobile phone may generate, in response to the drag operation of the user, a processing request used to establish a device collaboration link between the mobile phone and the Vision, and send the processing request to the server.

S702: The server receives the processing request from the first electronic device.

S703: The server sends a control instruction to the second electronic device based on the processing request.

The control instruction is used to control the second electronic device to establish a device collaboration link, and the second electronic device is a to-be-collaborated device.

For example, the first electronic device is a mobile phone, and the second electronic device is a Vision. The server may generate a control instruction for the Vision, where the control instruction is used to control the Vision to establish a device collaboration link between the Vision and the mobile phone.

S704: The second electronic device receives the control instruction from the server.

S705: The second electronic device establishes the device collaboration link between the first electronic device and the second electronic device based on the control instruction.

In this embodiment of this application, the second electronic device may verify an identity of the first electronic device based on the control instruction. When identity verification of the first electronic device succeeds, the second electronic device determines that the first electronic device is an authorized device, and may establish the device collaboration link between the first electronic device and the second electronic device through a distributed soft bus.

For example, the first electronic device is the mobile phone, and the second electronic device is the Vision. The Vision may verify an identity of the mobile phone based on the control instruction, and when identity verification of the mobile phone succeeds, determine that the mobile phone is an authorized device. The Vision may establish the device collaboration link between the mobile phone and the Vision through a distributed soft bus.

S705 may alternatively be implemented by using S7051 to S7055.

S7051: The second electronic device sends a verification request to the first electronic device based on the control instruction.

The verification request is used to verify whether the second electronic device is an authorized device.

In this embodiment of this application, the second electronic device may generate the verification request based on the control instruction, and send the verification request to the first electronic device, so that after receiving the verification request, the first electronic device may determine, based on the verification request, whether the second electronic device is the authorized device.

In a feasible implementation, the verification request carries identification information of the second electronic device and first encrypted information, and the first encrypted information is obtained by the second electronic device by encrypting the identification information of the second electronic device based on stored first key information. The identification information of the second electronic device is used to uniquely indicate the second electronic device, and the identification information of the second electronic device may be, for example, a UDID or a MAC address of the second electronic device.

The first key information may include a group identifier key corresponding to the second electronic device and a user identifier key corresponding to the second electronic device. The group identifier key corresponding to the second electronic device may be generated based on identification information of a communication group corresponding to the second electronic device, and the user identifier key corresponding to the second electronic device may be generated based on an account (namely, a group member account) corresponding to the second electronic device. The first encrypted information may be specifically obtained by encrypting the identification information of the second electronic device based on the group identifier key corresponding to the second electronic device and the user identifier key corresponding to the second electronic device. When the first electronic device and the second electronic device belong to the same communication group, a group identifier key corresponding to the first electronic device is the same as the group identifier key corresponding to the second electronic device.

For example, the first electronic device is the mobile phone, and the second electronic device is the Vision. The Vision may encrypt a UDID of the Vision based on a communication group key and a user identifier key that correspond to the Vision, to obtain the first encrypted information; generate a verification request based on the UDID of the Vision and the first encrypted information; and send the verification request to the mobile phone, where the verification request carries the UDID of the Vision and the first encrypted information.

S7052: The first electronic device receives the verification request.

S7053: The first electronic device sends a verification response to the second electronic device when determining, based on the verification request, that the second electronic device is the authorized device.

In this embodiment of this application, the first electronic device may determine, based on the verification request, whether the second electronic device is the authorized device; and when determining that the second electronic device is the authorized device, generate a verification response, and send the verification response to the second electronic device. The verification response is used to determine whether the first electronic device is an authorized device.

The first electronic device may determine, based on the verification request, whether the second electronic device is the authorized device in the following manner:

The first electronic device may parse the verification request to obtain the first encrypted information and the identification information of the second electronic device. The first electronic device may encrypt the identification information of the second electronic device based on stored second key information, to obtain second encrypted information. The first encrypted information may be matched with the second encrypted information to obtain a matching result. When the matching result indicates that the first encrypted information matches the second encrypted information, it is determined that the second electronic device is the authorized device. The second key information may include a group identifier key corresponding to the first electronic device and a user identifier key corresponding to the first electronic device. The group identifier key corresponding to the first electronic device may be generated based on identification information of a communication group corresponding to the first electronic device, and the user identifier key corresponding to the first electronic device may be generated based on an account (namely, a group member account) corresponding to the first electronic device.

In the foregoing solution, the first electronic device verifies validity of the second electronic device, to ensure that only the authorized device can establish the device collaboration link, thereby ensuring security and reliability of subsequent data transmission and operations. This helps prevent malicious devices from launching unauthorized attacks and protects user privacy and data security.

For example, the first electronic device is the mobile phone, and the second electronic device is the Vision. The mobile phone may parse the verification request sent by the Vision, to obtain the UDID of the Vision and the first encrypted information. The first encrypted information is obtained by the Vision by encrypting the UDID of the Vision based on a communication group key corresponding to the Vision and a user identifier key corresponding to the Vision. The mobile phone may encrypt the UDID of the Vision based on a communication group key corresponding to the mobile phone and a user identifier key corresponding to the mobile phone, to obtain the second encrypted information. The mobile phone may match the first encrypted information with the second encrypted information, to obtain a matching result. When the matching result indicates that the first encrypted information matches the second encrypted information, the mobile phone may determine that the Vision is an authorized device. For example, that the first encrypted information matches the second encrypted information may mean that the first encrypted information is consistent with the second encrypted information.

In this embodiment of this application, the verification response carries identification information of the first electronic device and third encrypted information. The identification information of the first electronic device is used to uniquely indicate the first electronic device. For example, the identification information of the first electronic device may be a UDID of the first electronic device. The third encrypted information may be obtained by the first electronic device by encrypting the identification information of the first electronic device based on the stored second key information.

S7054: The second electronic device receives the verification response.

S7055: The second electronic device establishes the device collaboration link between the first electronic device and the second electronic device when determining, based on the verification response, that the first electronic device is the authorized device.

In this embodiment of this application, the second electronic device may determine, based on the verification response, whether the first electronic device is the authorized device. When determining that the first electronic device is the authorized device, the second electronic device may establish the device collaboration link between the first electronic device and the second electronic device through a distributed soft bus.

The second electronic device may determine, based on the verification response, whether the first electronic device is the authorized device in the following manner:

In a feasible implementation, the second electronic device may parse the verification response to obtain the identification information of the first electronic device and the third encrypted information. The second electronic device may encrypt the identification information of the first electronic device by using the first key information (the first key information is, for example, the group identifier key corresponding to the second electronic device and the user identifier key corresponding to the second electronic device), to obtain fourth encrypted information. The third encrypted information may be matched with the fourth encrypted information to obtain a matching result. When the matching result indicates that the third encrypted information matches the fourth encrypted information, it is determined that the first electronic device is the authorized device.

For example, the first electronic device is the mobile phone, and the second electronic device is the Vision. The Vision may receive the verification response sent by the mobile phone, and parse the verification response to obtain a UDID of the mobile phone and the third encrypted information. The third encrypted information may be obtained by the mobile phone by encrypting the UDID of the mobile phone based on the communication group key corresponding to the mobile phone and the user identifier key corresponding to the mobile phone. The Vision may encrypt the UDID of the mobile phone by using the communication group key corresponding to the Vision and the user identifier key corresponding to the Vision, to obtain the fourth encrypted information; and when the third encrypted information matches the fourth encrypted information, determine that the mobile phone is the authorized device.

Based on the foregoing solution, mutual verification is performed between the mobile phone and the Vision. After the verification succeeds, the Vision may establish the device collaboration link between the mobile phone and the Vision based on the distributed soft bus. This improves security and reliability of the established device collaboration link, and ensures that the devices can securely and reliably perform communication and data exchange.

An embodiment of this application provides a device collaboration method. After displaying a first control and at least one second control, a first electronic device sends a processing request to a server in response to a second user operation, and the server sends a control instruction to a second electronic device based on the processing request. The second electronic device establishes a device collaboration link between the first electronic device and the second electronic device based on the control instruction. In this way, a corresponding device is selected from automatically discovered devices in a same family group based on a user requirement to perform task collaboration or function transfer, thereby expanding an optional range of devices required for task collaboration or function transfer and improving user experience.

In addition, before the device collaboration link is established, the user is unaware of the mutual authentication between the first electronic device and the second electronic device. After the authentication is completed, the device collaboration link may be established, and task collaboration or function transfer may be automatically performed through the device collaboration link, thereby simplifying user operations and improving user experience.

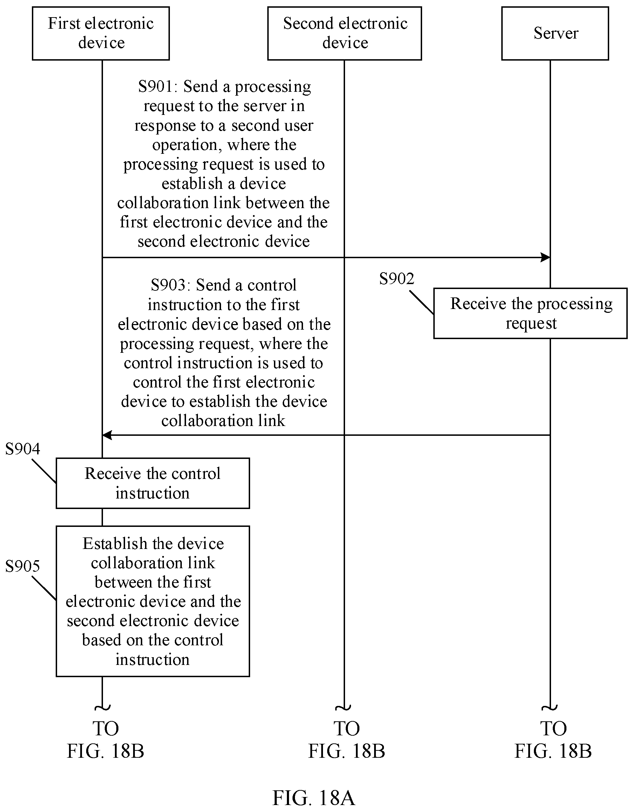

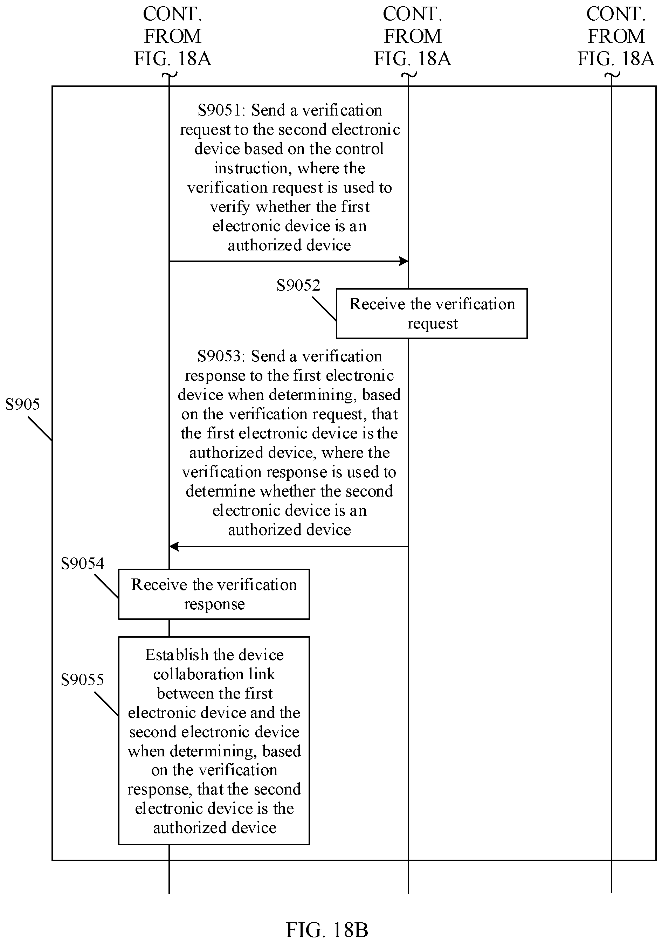

FIG. 18A and FIG. 18B are a schematic flowchart of another device collaboration method according to this embodiment of this application. The device collaboration method may be applied after the first control and the at least one second control are displayed. For example, the device collaboration method may be applied after S606 or S611 in the foregoing embodiment, and may also be applied after the first control and the at least one second control are displayed by using another method. It should be understood that the device collaboration method provided in FIG. 18A and FIG. 18B is shown by using an example in which the first electronic device is a to-be-collaborated device and one of at least one second electronic device is a collaboration device. The device collaboration method may include S901 to S905. The following describes the steps in detail.

S901: The first electronic device sends the processing request to the server in response to the second user operation.

The processing request is used to establish the device collaboration link between the first electronic device and the second electronic device. The device collaboration link is used for task collaboration between the first electronic device and the second electronic device. The first electronic device is a to-be-collaborated device, and the second electronic device is a collaboration device. The second user operation is used to associate the first electronic device with the second electronic device.

In a feasible implementation, the second user operation may be a user operation performed on the first control. For example, a user presses and holds the first control and drags the first control close to the second control, and releases the first control when the first control reaches a specified area corresponding to the second control. The first control represents the first electronic device, and the second control represents the second electronic device. The dragged first control partially or completely overlap the second control.

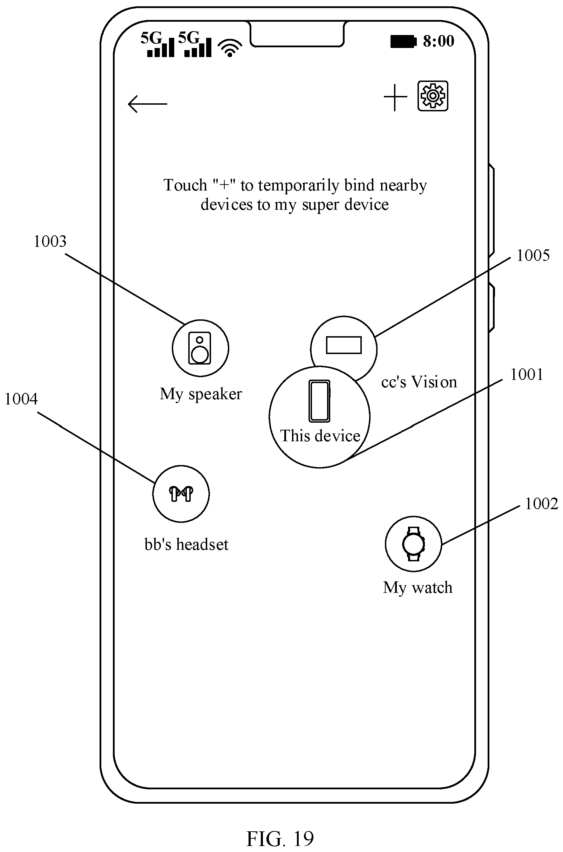

The first electronic device may be a mobile phone, and the second electronic device may be a Vision. As shown in FIG. 19, the first control may be an icon 1001 representing the mobile phone, the second control may be an icon 1005 representing the Vision, and the second user operation may be an operation of dragging the icon 1001 by the user to partially overlap the icon 1005. The mobile phone may generate, in response to the drag operation of the user, a processing request used to establish a device collaboration link between the mobile phone and the Vision, and send the processing request to the server.

S902: The server receives the processing request from the first electronic device.

S903: The server sends a control instruction to the first electronic device based on the processing request.

The control instruction is used to control the first electronic device to establish the device collaboration link between the first electronic device and the second electronic device. The first electronic device is a to-be-collaborated device.

For example, the first electronic device is the mobile phone, and the second electronic device is the Vision. The server may generate a control instruction for the mobile phone, where the control instruction is used to control the mobile phone to establish the device collaboration link between the Vision and the mobile phone.

S904: The first electronic device receives the control instruction from the server.

S905: The first electronic device establishes the device collaboration link between the first electronic device and the second electronic device based on the control instruction.

In this embodiment of this application, the first electronic device may verify an identity of the second electronic device based on the control instruction, and when identity verification of the second electronic device succeeds, determine that the second electronic device is an authorized device. The first electronic device may establish the device collaboration link between the first electronic device and the second electronic device through a distributed soft bus.

For example, the first electronic device is the mobile phone, and the second electronic device is the Vision. The mobile phone may verify an identity of the Vision based on the control instruction, and when identity verification of the Vision succeeds, determine that the Vision is an authorized device. The mobile phone may establish the device collaboration link between the mobile phone and the Vision through the distributed soft bus.

S905 may alternatively be implemented by using S9051 to S9055.

S9051: The first electronic device sends a verification request to the second electronic device based on the control instruction.

The verification request is used to verify whether the first electronic device is an authorized device.

In this embodiment of this application, the first electronic device may generate the verification request based on the control instruction, and send the verification request to the second electronic device, so that after receiving the verification request, the second electronic device may determine, based on the verification request, whether the first electronic device is the authorized device.

In a feasible implementation, the verification request carries identification information of the first electronic device and first encrypted information, and the first encrypted information is obtained by the first electronic device by encrypting the identification information of the first electronic device based on stored first key information. The identification information of the first electronic device is used to uniquely indicate the first electronic device, and the identification information of the first electronic device may be, for example, a UDID or a MAC address of the first electronic device.

The first key information may include a group identifier key corresponding to the first electronic device and a user identifier key corresponding to the first electronic device. The group identifier key corresponding to the first electronic device may be generated based on identification information of a communication group corresponding to the first electronic device, and the user identifier key corresponding to the first electronic device may be generated based on an account (namely, a group member account) corresponding to the first electronic device. The first encrypted information may be specifically obtained by encrypting the identification information of the first electronic device based on the group identifier key corresponding to the first electronic device and the user identifier key corresponding to the first electronic device. When the first electronic device and the second electronic device belong to a same communication group, the group identifier key corresponding to the first electronic device is the same as a group identifier key corresponding to the second electronic device.

For example, the first electronic device is the mobile phone, and the second electronic device is the Vision. The mobile phone may encrypt a UDID of the mobile phone based on a communication group key and a user identifier key that correspond to the mobile phone, to obtain the first encrypted information, generate a verification request based on the UDID of the mobile phone and the first encrypted information, and send the verification request to the Vision, where the verification request carries the UDID of the mobile phone and the first encrypted information.

S9052: The second electronic device receives the verification request.

S9053: The second electronic device sends a verification response to the first electronic device when determining, based on the verification request, that the first electronic device is the authorized device.

In this embodiment of this application, the second electronic device may determine, based on the verification request, whether the first electronic device is the authorized device; and when determining that the first electronic device is the authorized device, generate a verification response, and send the verification response to the first electronic device. The verification response is used to determine whether the second electronic device is an authorized device.

The second electronic device may determine, based on the verification request, whether the first electronic device is the authorized device in the following manner:

The second electronic device may parse the verification request to obtain the first encrypted information and the identification information of the first electronic device. The second electronic device may encrypt the identification information of the first electronic device based on stored second key information, to obtain second encrypted information. The first encrypted information may be matched with the second encrypted information to obtain a matching result. When the matching result indicates that the first encrypted information matches the second encrypted information, it is determined that the first electronic device is the authorized device. The second key information may include a group identifier key corresponding to the second electronic device and a user identifier key corresponding to the second electronic device. The group identifier key corresponding to the second electronic device may be generated based on identification information of a communication group corresponding to the second electronic device, and the user identifier key corresponding to the second electronic device may be generated based on an account (namely, a group member account) corresponding to the second electronic device.

In the foregoing solution, the first electronic device verifies validity of the second electronic device, to ensure that only the authorized device can establish the device collaboration link, thereby ensuring security and reliability of subsequent data transmission and operations. This helps prevent malicious devices from launching unauthorized attacks and protects user privacy and data security.

For example, the first electronic device is the mobile phone, and the second electronic device is the Vision. The Vision may parse the verification request sent by the mobile phone, to obtain the UDID of the mobile phone and the first encrypted information. The first encrypted information is obtained by the mobile phone by encrypting the UDID of the mobile phone based on a communication group key corresponding to the mobile phone and a user identifier key corresponding to the mobile phone. The Vision may encrypt the UDID of the mobile phone based on a communication group key corresponding to the Vision and a user identifier key corresponding to the Vision, to obtain the second encrypted information. The Vision may match the first encrypted information with the second encrypted information, to obtain a matching result. When the matching result indicates that the first encrypted information matches the second encrypted information, the Vision may determine that the mobile phone is an authorized device. That the first encrypted information matches the second encrypted information may mean that the first encrypted information is consistent with the second encrypted information, or a similarity between the first encrypted information and the second encrypted information is greater than a preset similarity threshold.

In this embodiment of this application, the verification response carries identification information of the second electronic device and third encrypted information. The identification information of the second electronic device is used to uniquely indicate the second electronic device. For example, the identification information of the second electronic device may be a UDID of the second electronic device. The third encrypted information may be obtained by the second electronic device by encrypting the identification information of the second electronic device based on the stored second key information.

S9054: The first electronic device receives the verification response.

S9055: The first electronic device establishes the device collaboration link between the first electronic device and the second electronic device when determining, based on the verification response, that the second electronic device is the authorized device.

In this embodiment of this application, the first electronic device may determine, based on the verification response, whether the second electronic device is the authorized device. When determining that the second electronic device is the authorized device, the first electronic device may establish the device collaboration link between the first electronic device and the second electronic device through a distributed soft bus.

The first electronic device may determine, based on the verification response, whether the second electronic device is the authorized device in the following manner:

In a feasible implementation, the first electronic device may parse the verification response to obtain the identification information of the second electronic device and the third encrypted information. The first electronic device may encrypt the identification information of the second electronic device by using the first key information (the first key information is, for example, the group identifier key corresponding to the first electronic device and the user identifier key corresponding to the first electronic device), to obtain fourth encrypted information. The third encrypted information may be matched with the fourth encrypted information to obtain a matching result. When the matching result indicates that the third encrypted information matches the fourth encrypted information, it is determined that the second electronic device is the authorized device. That the third encrypted information matches the fourth encrypted information may mean that the third encrypted information is consistent with the fourth encrypted information, or a similarity between the third encrypted information and the fourth encrypted information is greater than a preset similarity threshold.

For example, the first electronic device is the mobile phone, and the second electronic device is the Vision. The mobile phone may receive the verification response sent by the Vision, and parse the verification response to obtain a UDID of the Vision and the third encrypted information. The third encrypted information may be obtained by the Vision by encrypting the UDID of the Vision based on the communication group key corresponding to the Vision and the user identifier key corresponding to the Vision. The mobile phone may encrypt the UDID of the Vision by using the communication group key corresponding to the mobile phone and the user identifier key corresponding to the mobile phone, to obtain the fourth encrypted information; and when the third encrypted information matches the fourth encrypted information, determine that the mobile phone is an authorized device.

Based on the foregoing solution, mutual verification is performed between the mobile phone and the Vision. After the verification succeeds, the Vision may establish the device collaboration link between the mobile phone and the Vision based on the distributed soft bus. This improves security and reliability of the established device collaboration link, and ensures that the devices can securely and reliably perform communication and data exchange.

An embodiment of this application provides a device collaboration method. After displaying a first control and at least one second control, a first electronic device sends a processing request to a server in response to a second user operation, and the server sends a control instruction to the first electronic device based on the processing request. The first electronic device establishes a device collaboration link between the first electronic device and a second electronic device based on the control instruction. In this way, a corresponding device is selected from automatically discovered devices in a same family group based on a user requirement to perform task collaboration or function transfer, thereby expanding an optional range of devices required for task collaboration or function transfer and improving user experience.

In addition, before the device collaboration link is established, a user is unaware of the mutual authentication between the first electronic device and the second electronic device. After the authentication is completed, the device collaboration link may be established, and task collaboration or function transfer may be automatically performed through the device collaboration link, thereby simplifying user operations and improving user experience.

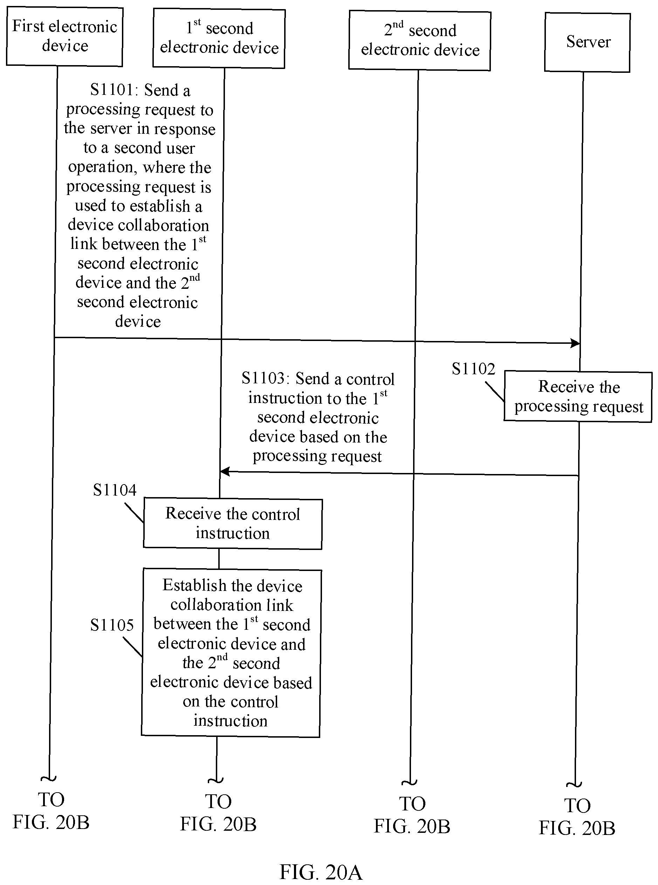

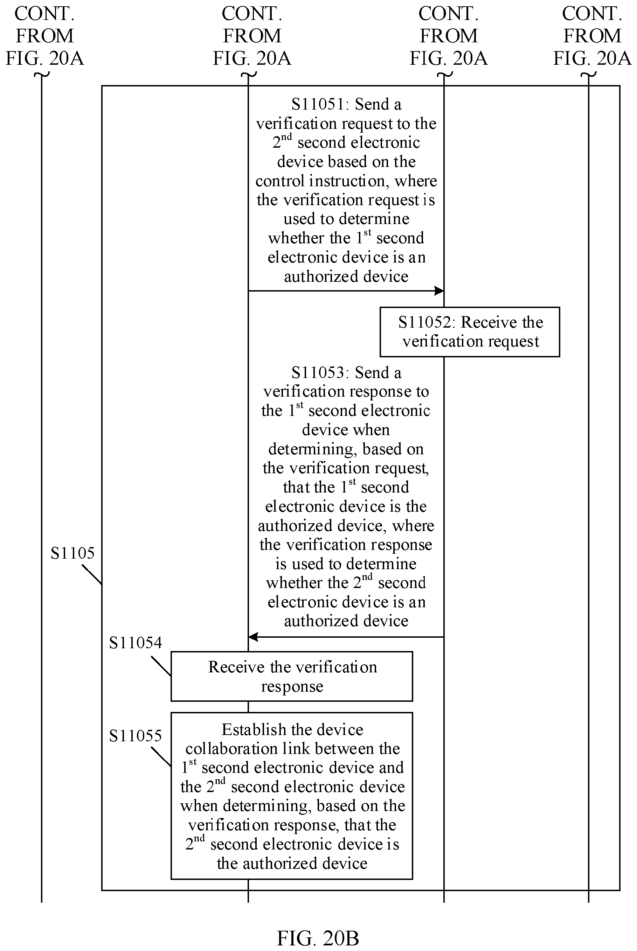

FIG. 20A and FIG. 20B are a schematic flowchart of the device collaboration method according to this embodiment of this application. The device collaboration method may be applied after the first control and the at least one second control are displayed. For example, the device collaboration method may be applied after S606 or S611 in the foregoing embodiment, and may also be applied after the first control and the at least one second control are displayed by using another method. It should be understood that the device collaboration method provided in FIG. 20A and FIG. 20B is shown by using an example in which at least one second electronic device means a plurality of second electronic devices and a device collaboration link is established between two second electronic devices. In the two second electronic devices, a 1^{st} second electronic device is a to-be-collaborated device, and the 2^{nd} second electronic device is a collaboration device. The device collaboration method may include S1101 to S1105. The following describes the steps in detail.

S1101: The first electronic device sends the processing request to the server in response to the second user operation.

The processing request is used to establish the device collaboration link between the 1^{st} second electronic device and the 2^{nd} second electronic device. The device collaboration link is used for task collaboration between the 1^{st} second electronic device and the 2^{nd} second electronic device. The 1^{st} second electronic device is a to-be-collaborated device, and the 2^{nd} second electronic device is a collaboration device. The second user operation is used to associate the 1^{st} second electronic device with the 2^{nd} second electronic device.

In a feasible implementation, the second user operation may be a user operation performed on one second control. For example, the user presses and holds the second control and drags the second control close to another second control, and releases the dragged second control when the second control dragged by the user reaches a specified area corresponding to the another second control. Different second controls represent different second electronic devices. The two second controls after dragging partially or completely overlap. A device corresponding to the second control dragged by the user is the 1^{st} second electronic device.

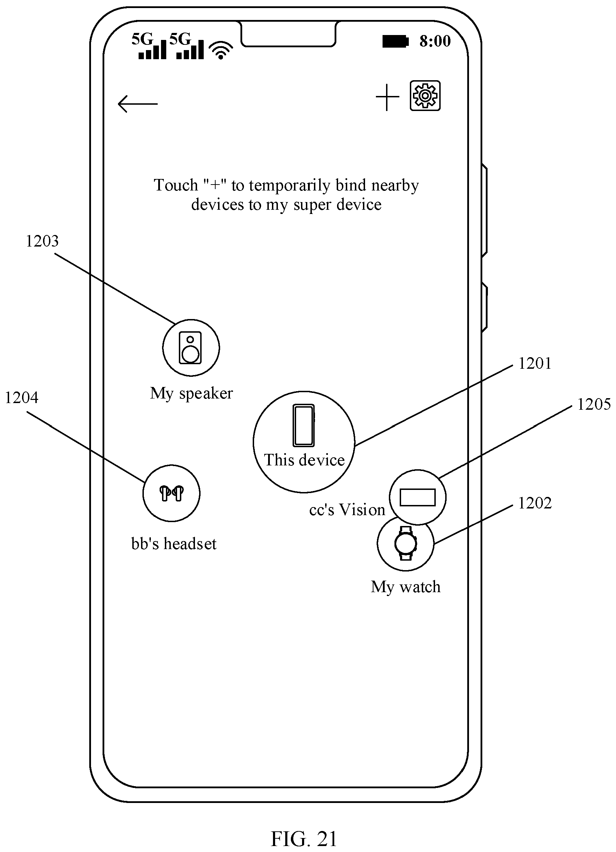

For example, the first electronic device is a mobile phone, the 1^{st} second electronic device may be a Vision, and the 2^{nd} second electronic device may be a watch. As shown in FIG. 21, the first control may be an icon 1201 representing the mobile phone, the second control corresponding to the 1^{st} second electronic device may be an icon 1205 representing the Vision, the second control corresponding to the 2^{nd} second electronic device may be an icon 1202 representing the watch, and the second user operation may be that the user presses and holds the icon 1205 and drags the icon 1205 to partially overlap the icon 1202. The mobile phone may generate, in response to the drag operation of the user, a processing request used to establish a device collaboration link between the Vision and the watch, and send the processing request to the server.

S1102: The server receives the processing request from the first electronic device.

S1103: The server sends a control instruction to the 1^{st} second electronic device based on the processing request.

The control instruction is used to control the 1^{st} second electronic device to establish the device collaboration link between the 1^{st} second electronic device and the 2^{nd} second electronic device.

For example, the first electronic device is a mobile phone, the 1^{st} second electronic device is a Vision, and the 2^{nd} second electronic device is a watch. After receiving a processing request sent by the mobile phone, the server may generate a control instruction for the Vision, where the control instruction is used to control the Vision to establish a device collaboration link between the Vision and the watch.

S1104: The 1^{st} second electronic device receives the control instruction from the server.

S1105: The 1^{st} second electronic device establishes the device collaboration link between the 1^{st} second electronic device and the 2^{nd} second electronic device based on the control instruction.

In this embodiment of this application, the 1^{st} second electronic device may verify an identity of the 2^{nd} second electronic device based on the control instruction, and when identity verification of the 2^{nd} second electronic device succeeds, determine that the 2^{nd} second electronic device is an authorized device. The 1^{st} second electronic device may establish the device collaboration link between the 1^{st} second electronic device and the 2^{nd} second electronic device through a distributed soft bus.

For example, the 1^{st} second electronic device is a Vision, and the 2^{nd} second electronic device is a watch. The Vision may verify an identity of the watch based on the control instruction, and when identity verification of the watch succeeds, determine that the watch is an authorized device. The Vision may establish a device collaboration link between the Vision and the watch through the distributed soft bus.

S1105 may alternatively be implemented by using S11051 to S11055.

S11051: The 1^{st} second electronic device sends a verification request to the 2^{nd} second electronic device based on the control instruction.

The verification request is used to verify whether the 1^{st} second electronic device is an authorized device.

In this embodiment of this application, the 1^{st} second electronic device may generate the verification request based on the control instruction, and send the verification request to the 2^{nd} second electronic device, so that after receiving the verification request, the 2^{nd} second electronic device may determine, based on the verification request, whether the 1^{st} second electronic device is the authorized device.

In a feasible implementation, the verification request carries identification information of the 1^{st} second electronic device and first encrypted information, and the first encrypted information is obtained by the 1^{st} second electronic device by encrypting the identification information of the 1^{st} second electronic device based on stored first key information. The identification information of the 1^{st} second electronic device is used to uniquely indicate the 1^{st} second electronic device, and the identification information of the 1^{st} second electronic device may be, for example, a UDID or a MAC address of the 1^{st} second electronic device.

The first key information may include a group identifier key corresponding to the 1^{st} second electronic device and a user identifier key corresponding to the 1^{st} second electronic device. The group identifier key corresponding to the 1^{st} second electronic device may be generated based on identification information of a communication group corresponding to the 1^{st} second electronic device, and the user identifier key corresponding to the 1^{st} second electronic device may be generated based on an account (namely, a group member account) corresponding to the 1^{st} second electronic device. The first encrypted information may be specifically obtained by the 1^{st} second electronic device by encrypting the identification information of the 1^{st} second electronic device based on the group identifier key corresponding to the 1^{st} second electronic device and the user identifier key corresponding to the 1^{st} second electronic device. When the 1^{st} second electronic device and the 2^{nd} second electronic device belong to a same communication group, the group identifier key corresponding to the 1^{st} second electronic device is the same as a group identifier key corresponding to the 2^{nd} second electronic device.

For example, the 1^{st} second electronic device is the Vision, and the 2^{nd} second electronic device is the watch. The Vision may encrypt a UDID of the Vision based on a communication group key and a user identifier key that correspond to the Vision, to obtain the first encrypted information, generate a verification request based on the UDID of the Vision and the first encrypted information, and send the verification request to the watch, where the verification request carries the UDID of the Vision and the first encrypted information.

S11052: The 2^{nd} second electronic device receives the verification request.

S11053: The 2^{nd} second electronic device sends a verification response to the 1^{st} second electronic device when determining, based on the verification request, that the 1^{st} second electronic device is the authorized device.

In this embodiment of this application, the 2^{nd} second electronic device may determine, based on the verification request, whether the 1^{st} second electronic device is the authorized device; and when determining that the 1^{st} second electronic device is the authorized device, generate a verification response, and send the verification response to the 1^{st} second electronic device. The verification response is used to determine whether the 2^{nd} second electronic device is the authorized device.

The 2^{nd} second electronic device may determine, based on the verification request, whether the 1^{st} second electronic device is the authorized device in the following manner:

The 2^{nd} second electronic device may parse the verification request to obtain the first encrypted information and the identification information of the 1^{st} second electronic device. The 2^{nd} second electronic device may encrypt the identification information of the 1^{st} second electronic device based on stored second key information, to obtain second encrypted information. The 2^{nd} second electronic device may match the first encrypted information with the second encrypted information, to obtain a matching result. When the matching result indicates that the first encrypted information matches the second encrypted information, it is determined that the 1^{st} second electronic device is the authorized device. The second key information may include the group identifier key corresponding to the 2^{nd} second electronic device and a user identifier key corresponding to the 2^{nd} second electronic device. The group identifier key corresponding to the 2^{nd} second electronic device may be generated based on identification information of a communication group corresponding to the 2^{nd} second electronic device, and the user identifier key corresponding to the 2^{nd} second electronic device may be generated based on an account (namely, a group member account) corresponding to the 2^{nd} second electronic device.

In the foregoing solution, the 1^{st} second electronic device verifies validity of the 2^{nd} second electronic device, to ensure that only the authorized device can establish the device collaboration link, thereby ensuring security and reliability of subsequent data transmission and operations. This helps prevent malicious devices from launching unauthorized attacks and protects user privacy and data security.

For example, the 1^{st} second electronic device is the Vision, and the 2^{nd} second electronic device is the watch. The watch may parse the verification request sent by the Vision, to obtain the UDID of the Vision and the first encrypted information. The first encrypted information is obtained by the Vision by encrypting the UDID of the Vision based on a communication group key corresponding to the Vision and a user identifier key corresponding to the Vision. The watch may encrypt the UDID of the Vision based on a communication group key corresponding to the watch and a user identifier key corresponding to the watch, to obtain the second encrypted information. The watch may match the first encrypted information with the second encrypted information, to obtain a matching result. When the matching result indicates that the first encrypted information matches the second encrypted information, the watch may determine that the Vision is an authorized device.

In this embodiment of this application, the verification response carries identification information of the 2^{nd} second electronic device and third encrypted information. The identification information of the 2^{nd} second electronic device is used to uniquely indicate the 2^{nd} second electronic device. For example, the identification information of the 2^{nd} second electronic device may be a UDID of the 2^{nd} second electronic device. The third encrypted information may be obtained by the 2^{nd} second electronic device by encrypting the identification information of the 2^{nd} second electronic device based on the stored second key information.

S11054: The 1^{st} second electronic device receives the verification response.

S11055: The 1^{st} second electronic device establishes the device collaboration link between the 1^{st} second electronic device and the 2^{nd} second electronic device when determining, based on the verification response, that the 2^{nd} second electronic device is the authorized device.

In this embodiment of this application, the 1^{st} second electronic device may determine, based on the verification response, whether the 2^{nd} second electronic device is the authorized device. When determining that the 2^{nd} second electronic device is the authorized device, the 1^{st} second electronic device may establish the device collaboration link between the 1^{st} second electronic device and the 2^{nd} second electronic device through a distributed soft bus.

The 1^{st} second electronic device may determine, based on the verification response, whether the 2^{nd} second electronic device is the authorized device in the following manner:

In a feasible implementation, the 1^{st} second electronic device may parse the verification response to obtain the identification information of the 2^{nd} second electronic device and the third encrypted information. The 1^{st} second electronic device may encrypt the identification information of the 2^{nd} second electronic device by using the first key information, for example, the group identifier key corresponding to the 1^{st} second electronic device and the user identifier key corresponding to the 1^{st} second electronic device, to obtain fourth encrypted information. The third encrypted information may be matched with the fourth encrypted information to obtain a matching result. When the matching result indicates that the third encrypted information matches the fourth encrypted information, it is determined that the 2^{nd} second electronic device is the authorized device.

For example, the 1^{st} second electronic device is the Vision, and the 2^{nd} second electronic device is the watch. The Vision may receive the verification response sent by the watch, and parse the verification response to obtain a UDID of the watch and the third encrypted information. The third encrypted information may be obtained by the watch by encrypting the UDID of the watch based on the communication group key corresponding to the watch and the user identifier key corresponding to the watch. The Vision may encrypt the UDID of the watch by using the communication group key corresponding to the Vision and the user identifier key corresponding to the Vision, to obtain the fourth encrypted information; and when the third encrypted information matches the fourth encrypted information, determine that the watch is an authorized device.

Based on the foregoing solution, mutual verification is performed between the Vision and the watch. After the verification succeeds, the Vision may establish the device collaboration link between the Vision and the watch based on the distributed soft bus. This improves security and reliability of the established device collaboration link, and ensures that the devices can securely and reliably perform communication and data exchange.

Task collaboration or function transfer may be performed between the 1^{st} second electronic device and the 2^{nd} second electronic device through the established device collaboration link. For example, the 1^{st} second electronic device is the Vision, and the 2^{nd} second electronic device is the watch. The watch may transfer currently displayed content to the Vision for displaying. Certainly, when the watch determines, based on detected information such as a heartbeat and blood pressure of the user, that the user is in a running scenario, the watch may alternatively link the Vision to play a video related to an exercise scenario. An account corresponding to the watch and an account corresponding to the display may be the same or may be different.

An embodiment of this application provides a device collaboration method. After a first electronic device displays a first control and at least one second control, the first electronic device sends a processing request to a server in response to a second user operation, where the second user operation is used to associate a 1^{st} second electronic device with a 2^{nd} second electronic device. The server sends a control instruction to the 1^{st} second electronic device based on the processing request. The 1^{st} second electronic device establishes a device collaboration link between the 1^{st} second electronic device and the 2^{nd} second electronic device based on the control instruction, so that the 1^{st} second electronic device and the 2^{nd} second electronic device perform task collaboration or function transfer through the device collaboration link. In this way, a corresponding device is selected from automatically discovered devices in a same family group based on a user requirement to perform task collaboration or function transfer, thereby expanding an optional range of devices required for task collaboration or function transfer and improving user experience.

In addition, before the device collaboration link is established, a user is unaware of mutual authentication between the 1^{st} second electronic device and the 2^{nd} second electronic device. After the authentication is completed, the device collaboration link may be established, and task collaboration or function transfer may be automatically performed through the device collaboration link, thereby simplifying user operations and improving user experience.

In the foregoing plurality of embodiments, in the first control and the at least one second control displayed by the first electronic device, a representation form of a control corresponding to a same-account device may be different from a representation form of a control corresponding to a different-account device. In this way, the user can easily distinguish which devices are same-account devices and which devices are different-account devices, thereby improving user experience.

For example, the first electronic device is a mobile phone, a quantity of the at least one second electronic device is four, and the at least one second electronic device is a watch, a speaker, a headset, and a Vision. An account corresponding to the mobile phone may be an account m1, an account corresponding to the speaker may be the account m1, an account corresponding to the watch may be the account m1, an account corresponding to the headset may be an account m2, and an account corresponding to the Vision may be an account m3. Colors of an icon representing the mobile phone, an icon representing the watch, and an icon representing the speaker that are displayed by the first electronic device may be the same. However, the color is different from colors of an icon representing the headset and an icon representing the Vision that are displayed by the first electronic device. For example, colors of the icon representing the mobile phone, the icon representing the watch, and the icon representing the speaker may all be yellow, a color of the icon representing the headset may be green, and a color of the icon representing the headset may be blue.

According to the device collaboration methods provided in the foregoing plurality of embodiments, a same-account device and a different-account device can be automatically discovered, and a device collaboration link can be established between cross-account devices (namely, devices under different accounts). Through the device collaboration link, task collaboration or function transfer can be performed between the cross-account devices, thereby expanding an optional range of devices during task collaboration or function transfer, and improving user experience. In addition, before the device collaboration link is established between the cross-account devices, a user does not need to be aware of mutual authentication performed between the cross-account devices, thereby simplifying user operations and further improving user experience.

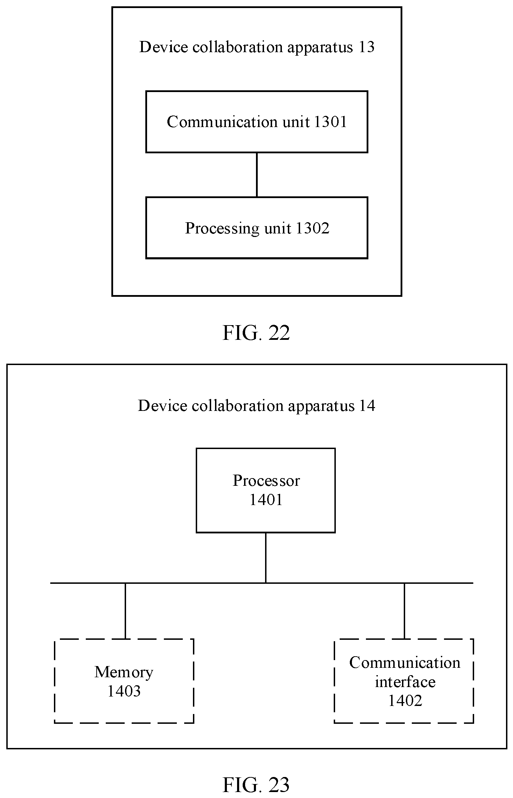

FIG. 22 is a block diagram of a device collaboration apparatus according to an embodiment of this application. As shown in FIG. 22, the device collaboration apparatus 13 may include a communication unit 1301 and a processing unit 1302. The communication unit 1301 may implement a corresponding communication function. The communication may be internal communication of the device collaboration apparatus 13 or may be communication between the device collaboration apparatus 13 and another apparatus. The processing unit 1302 may implement a corresponding processing function. The communication unit 1301 may also be referred to as a communication interface or a transceiver unit. Optionally, the device collaboration apparatus 13 may further include a storage unit. The storage unit may be configured to store instructions and/or data. The processing unit 1302 may read the instructions and/or the data in the storage unit, to cause the apparatus to implement the foregoing method embodiments.

In a possible design, the device collaboration apparatus 13 may be the first electronic device in the foregoing method embodiments, or may be a module or a chip used in the first electronic device. The device collaboration apparatus 13 may be configured to perform steps or procedures performed by the first electronic device in the foregoing method embodiments.

Specifically, the communication unit 1301 is configured to send a probe request in response to a first user operation, where the first user operation is used to enable a device collaboration function. The communication unit 1301 is further configured to receive at least one probe response to the probe request. The processing unit 1302 is configured to determine at least one second electronic device based on the at least one probe response, where the first electronic device and the at least one second electronic device belong to a same communication group, an account corresponding to a part or all of the at least one second electronic device is different from an account corresponding to the first electronic device, and the probe response indicates that the first electronic device and the second electronic device belong to the same communication group. The processing unit 1302 is further configured to display a first control and at least one second control, where the first control represents the first electronic device, and the second control represents the second electronic device.

Optionally, the probe request carries at least one of identification information of the first electronic device, an account corresponding to the first electronic device, and group identification information corresponding to the first electronic device.

Optionally, the probe response is sent by the second electronic device when the second electronic device determines, based on the probe request and stored group information corresponding to the second electronic device, that the second electronic device and the first electronic device belong to the same communication group.

Optionally, the probe response carries the group identification information of the communication group and identification information of the second electronic device.

Optionally, the communication unit 1301 is further configured to send a processing request to a server in response to a second user operation, where the processing request is used to establish a device collaboration link between a collaboration device and a to-be-collaborated device, the collaboration device and the to-be-collaborated device are the first electronic device and an electronic device in the at least one second electronic device, and the second user operation is used to associate the collaboration device with the to-be-collaborated device.

Optionally, the communication unit 1301 is further configured to: receive a verification request from the to-be-collaborated device, where the verification request is used to determine whether the to-be-collaborated device is an authorized device, the verification request is sent by the to-be-collaborated device based on a control instruction from the server, and the control instruction is sent by the server based on the processing request; and send a verification response to the to-be-collaborated device when determining, based on the verification request, that the to-be-collaborated device is the authorized device, where the verification response is used to determine whether the first electronic device is an authorized device.

Optionally, the processing unit 1302 is further configured to parse the verification request to obtain identification information of the to-be-collaborated device and first encrypted information, where the first encrypted information is obtained by encrypting the identification information of the to-be-collaborated device based on a group identifier key corresponding to the to-be-collaborated device and a user identifier key corresponding to the to-be-collaborated device. The processing unit 1302 is further configured to encrypt the identification information of the to-be-collaborated device based on a group identifier key corresponding to the first electronic device and a user identifier key corresponding to the first electronic device, to obtain second encrypted information. The processing unit 1302 is further configured to: when the first encrypted information matches the second encrypted information, determine that the to-be-collaborated device is the authorized device. The communication unit 1301 is further configured to send the verification response to the to-be-collaborated device, where the verification response carries the identification information of the first electronic device and third encrypted information, and the third encrypted information is obtained by encrypting the identification information of the first electronic device based on the group identifier key corresponding to the first electronic device and the user identifier key corresponding to the first electronic device.

Optionally, the communication unit 1301 is further configured to receive the control instruction from the server, where the control instruction is used to control the first electronic device to establish the device collaboration link, and the control instruction is sent by the server based on the processing request. The communication unit 1301 is further configured to send a verification request to the collaboration device based on the control instruction, where the verification request is used to determine whether the first electronic device is the authorized device. The processing unit 1302 is further configured to establish the device collaboration link when determining, based on a verification response from the collaboration device, that the collaboration device is an authorized device, where the verification response is sent by the collaboration device when the collaboration device determines that the first electronic device is the authorized device.

Optionally, the processing unit 1302 is specifically configured to: parse the verification response to obtain identification information of the collaboration device and third encrypted information, where the third encrypted information is obtained by encrypting the identification information of the collaboration device based on a group identifier key corresponding to the collaboration device and a user identifier key corresponding to the collaboration device; encrypt the identification information of the collaboration device based on a group identifier key corresponding to the first electronic device and a user identifier key corresponding to the first electronic device, to obtain fourth encrypted information; when the third encrypted information matches the fourth encrypted information, determine that the collaboration device is the authorized device; and establish the device collaboration link.

Optionally, the communication unit 1301 is further configured to obtain first device information of the first electronic device and second device information of the at least one second electronic device, where the first device information represents a status and/or an attribute of the first electronic device, and the second device information represents a status and/or an attribute of the second electronic device. The processing unit 1302 is specifically configured to: display the first control based on the first device information, and display the at least one second control based on the second device information of the at least one second electronic device.

Optionally, the communication unit 1301 is specifically configured to: send an obtaining request to the server, where the obtaining request is used to obtain the first device information and the second device information of the at least one second electronic device; and receive the first device information and the second device information of the at least one second electronic device from the server.

In a possible design, the device collaboration apparatus 13 may be the server in the foregoing method embodiments, or may be a module or a chip used in the server. The device collaboration apparatus 13 may be configured to perform steps or procedures performed by the server in the foregoing method embodiments.

Specifically, the communication unit 1301 is configured to receive an obtaining request from a first electronic device, where the obtaining request is used to obtain first device information of the first electronic device and second device information of at least one second electronic device, the first device information represents a status and/or an attribute of the first electronic device, the second device information represents a status and/or an attribute of the second electronic device, the first electronic device and the at least one second electronic device belong to a same communication group, and an account corresponding to a part or all of the at least one second electronic device is different from an account corresponding to the first electronic device. The communication unit 1301 is further configured to send the first device information and the second device information of the at least one second electronic device to the first electronic device, where the first device information is used to display a first control representing the first electronic device, and the second device information is used to display a second control representing the second electronic device.

Optionally, the communication unit 1301 is further configured to receive the processing request from the first electronic device, where the processing request is used to establish the device collaboration link between the collaboration device and the to-be-collaborated device. The processing unit 1302 is configured to generate the control instruction based on the processing request. The communication unit 1301 is further configured to send the control instruction to the to-be-collaborated device, where the control instruction is used to control the to-be-collaborated device to establish the device collaboration link.

Optionally, the communication unit 1301 is further configured to send group information of the communication group to a plurality of electronic devices in the communication group, where the group information is used by an electronic device to determine whether the electronic device and another electronic device are in the same communication group, and the plurality of electronic devices include the first electronic device and the at least one second electronic device.

Optionally, the group information includes at least one of group identification information, an account of a group member, and identification information of an electronic device corresponding to the account of the group member.

In a possible design, the device collaboration apparatus 13 may be the second electronic device in the foregoing method embodiments, or may be a module or a chip used in the second electronic device. The device collaboration apparatus 13 may be configured to perform steps or procedures performed by the second electronic device in the foregoing method embodiments.

Optionally, the communication unit 1301 is configured to receive a probe request from the first electronic device. The communication unit 1301 is further configured to send a probe response to the first electronic device when determining, based on the probe request, that the second electronic device and the first electronic device belong to a same communication group, where the probe response indicates that the first electronic device and the second electronic device belong to the same communication group, and at least a part of electronic devices in the communication group correspond to different accounts.

Optionally, the probe request carries at least one of identification information of the first electronic device, an account corresponding to the first electronic device, and group identification information corresponding to the first electronic device.

Optionally, the processing unit 1302 is configured to determine, based on the probe request and stored group information corresponding to the second electronic device, whether the first electronic device and the second electronic device belong to the same communication group. The communication unit 1301 is configured to send the probe response to the first electronic device when the first electronic device and the second electronic device belong to the same communication group.

Optionally, the probe response carries the group identification information of the communication group and identification information of the second electronic device.

Optionally, the communication unit 1301 is further configured to receive the group information from the server, where the group information includes at least one of the group identification information, an account of a group member, and identification information of an electronic device corresponding to the account of the group member.

Optionally, the communication unit 1301 is further configured to receive a verification request from the to-be-collaborated device, where the verification request is used to determine whether the to-be-collaborated device is an authorized device, and the verification request is sent by the to-be-collaborated device based on the control instruction from the server. The communication unit 1301 is further configured to send a verification response to the to-be-collaborated device when determining, based on the verification request, that the to-be-collaborated device is the authorized device, where the verification response is used to determine whether the second electronic device is an authorized device.

Optionally, the processing unit 1302 is configured to: parse the verification request to obtain identification information of the to-be-collaborated device and first encrypted information, where the first encrypted information is obtained by encrypting the identification information of the to-be-collaborated device based on a group identifier key corresponding to the to-be-collaborated device and a user identifier key corresponding to the to-be-collaborated device; encrypt the identification information of the to-be-collaborated device based on a group identifier key corresponding to the second electronic device and a user identifier key corresponding to the second electronic device, to obtain second encrypted information; and when the first encrypted information matches the second encrypted information, determine that the to-be-collaborated device is the authorized device. The communication unit 1301 is further configured to send the verification response to the to-be-collaborated device, where the verification response carries the identification information of the second electronic device and third encrypted information, and the third encrypted information is obtained by encrypting the identification information of the second electronic device based on the group identifier key corresponding to the second electronic device and the user identifier key corresponding to the second electronic device.

Optionally, the communication unit 1301 is further configured to: receive the control instruction from the server, where the control instruction is used to control the second electronic device to establish a device collaboration link between the second electronic device and a collaboration device; and send a verification request to the collaboration device based on the control instruction, where the verification request is used to determine whether the second electronic device is the authorized device. The processing unit 1302 establishes the device collaboration link when determining, based on a verification response from the collaboration device, that the collaboration device is an authorized device, where the verification response is sent by the collaboration device when the collaboration device determines that the second electronic device is the authorized device.

Optionally, the processing unit 1302 is further configured to: parse the verification response to obtain identification information of the collaboration device and third encrypted information, where the third encrypted information is obtained by encrypting the identification information of the collaboration device based on a group identifier key corresponding to the collaboration device and a user identifier key corresponding to the collaboration device; encrypt the identification information of the collaboration device based on a group identifier key corresponding to the second electronic device and a user identifier key corresponding to the second electronic device, to obtain fourth encrypted information; when the third encrypted information matches the fourth encrypted information, determine that the collaboration device is the authorized device; and establish the device collaboration link.

For details of steps or procedures performed by the units in the device collaboration apparatus 13, refer to the descriptions in the corresponding methods. Details are not described herein again.

It should be understood that the "unit" in the device collaboration apparatus 13 may be implemented by hardware, or may be implemented by software, or may be implemented by hardware executing corresponding software. For example, the "unit" may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. For another example, the communication unit 1301 may be replaced with a transceiver or a transceiver circuit (which may include, for example, a receiving circuit and a transmitting circuit), and the processing unit 1302 may be replaced with a processor or a processing circuit.

FIG. 23 is a block diagram of another device collaboration apparatus 14 according to an embodiment of this application. The device collaboration apparatus 14 may be a first electronic device, a second electronic device, or a server, or may be a chip, a chip system, a processor, or the like that supports the first electronic device, the second electronic device, or the server in implementing the foregoing methods. The device collaboration apparatus 14 may be configured to implement the methods described in the foregoing method embodiments. For details, refer to the descriptions in the foregoing method embodiments.

The device collaboration apparatus 14 may include one or more processors 1401. The processor 1401 may also be referred to as a processing unit, and may implement a specific control function. The processor 1401 may be a general-purpose processor, a dedicated processor, or the like. For example, the processor 1401 may be a baseband processor, a central processing unit (central processing unit, CPU), a digital signal processor (digital signal processor, DSP), an application-specific integrated circuit (application-specific integrated circuit, ASIC), a field programmable gate array (field programmable gate array, FPGA), or another programmable logic device, for example, a discrete gate, a transistor logic device, or a discrete hardware component. The baseband processor may be configured to process a communication protocol and communication data. The central processing unit may be configured to: control the device collaboration apparatus (for example, a base station, a baseband chip, a user, a user chip, a DU, or a CU), execute a software program, and process data of the software program.

In an optional design, the processor 1401 may alternatively store instructions and/or data, and the instructions and/or the data may be run by the processor 1401, to cause the device collaboration apparatus 14 to perform the methods described in the foregoing method embodiments.

In another optional design, the device collaboration apparatus 14 may include a communication interface 1402 configured to implement receiving and sending functions. For example, the communication interface 1402 may be a transceiver circuit, an interface, an interface circuit, or a transceiver. The transceiver circuit, the interface, the interface circuit, or the transceiver configured to implement the receiving and sending functions may be separated, or may be integrated together. The transceiver circuit, the interface, the interface circuit, or the transceiver may be configured to read and write code/data, or the transceiver circuit, the interface, the interface circuit, or the transceiver may be configured to transmit or transfer a signal.

Optionally, the device collaboration apparatus 14 may include one or more memories 1403. The memory may store instructions. The instructions may be run on the processor 1401, to cause the device collaboration apparatus 14 to perform the methods described in the foregoing method embodiments. Optionally, the memory 1403 may further store data. Optionally, the processor 1401 may also store instructions and/or data. The processor 1401 and the memory 1403 may be separately disposed, or may be integrated together.

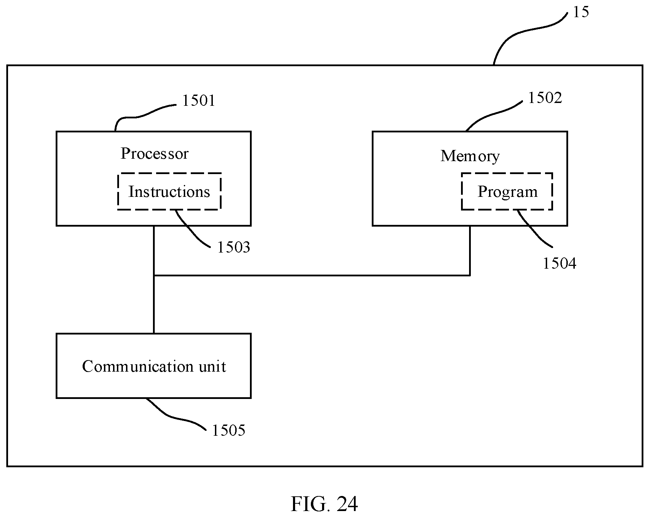

FIG. 24 is a diagram of a structure of an electronic device according to an embodiment of this application. The device collaboration apparatus 13 or the device collaboration apparatus 14 may be configured in the electronic device 15. Alternatively, the device collaboration apparatus 13 or the device collaboration apparatus 14 may be an electronic device, and the electronic device may be the first electronic device, the second electronic device, or the server in the foregoing method embodiments. The electronic device 15 may perform actions performed by the first electronic device, the second electronic device, or the server in the foregoing method embodiments. Optionally, for ease of description, FIG. 24 shows only main components of the electronic device.

In an implementation, the electronic device 15 is a first electronic device, and is configured to: send a probe request in response to a first user operation, where the first user operation is used to enable a device collaboration function; receive at least one probe response to the probe request; determine at least one second electronic device based on the at least one probe response, where the first electronic device and the at least one second electronic device belong to a same communication group, an account corresponding to a part or all of the at least one second electronic device is different from an account corresponding to the first electronic device, and the probe response indicates that the first electronic device and the second electronic device belong to the same communication group; and display a first control and at least one second control, where the first control represents the first electronic device, and the second control represents the second electronic device.

In an implementation, the electronic device 15 is a server, and is configured to: receive an obtaining request from a first electronic device, where the obtaining request is used to obtain first device information of the first electronic device and second device information of at least one second electronic device, the first device information represents a status and/or an attribute of the first electronic device, the second device information represents a status and/or an attribute of the second electronic device, the first electronic device and the at least one second electronic device belong to a same communication group, and an account corresponding to a part or all of the at least one second electronic device is different from an account corresponding to the first electronic device; and send the first device information and the second device information of the at least one second electronic device to the first electronic device, where the first device information is used to display a first control representing the first electronic device, and the second device information is used to display a second control representing the second electronic device.

In another implementation, the electronic device 15 is a second electronic device, and is configured to: receive a probe request from a first electronic device; and send a probe response to the first electronic device when determining, based on the probe request, that the second electronic device and the first electronic device belong to a same communication group, where the probe response indicates that the first electronic device and the second electronic device belong to the same communication group, and at least a part of electronic devices in the communication group correspond to different accounts.

As shown in FIG. 24, the electronic device 15 includes one or more processors 1501. The one or more processors 1501 may support the electronic device 15 in implementing the device collaboration methods in the method embodiments. The processor 1501 may be a general-purpose processor or a dedicated processor. For example, the processor 1501 may be a central processing unit (central processing unit, CPU), a digital signal processor (digital signal processor, DSP), an application-specific integrated circuit (application-specific integrated circuit, ASIC), a field programmable gate array (field programmable gate array, FPGA), or another programmable logic device, for example, a discrete gate, a transistor logic device, or a discrete hardware component.

The processor 1501 may be configured to: control the electronic device 15, execute a software program, and process data of the software program. The electronic device 15 may further include a communication unit 1505, configured to implement signal input (receiving) and output (sending).

For example, the electronic device 15 may be a chip, and the communication unit 1505 may be an input circuit and/or an output circuit of the chip, or the communication unit 1505 may be a communication interface of the chip. The chip may be used as a component of a terminal device or another electronic device.

For another example, the electronic device 15 may be a terminal device, and the communication unit 1505 may be a transceiver of the terminal device, or the communication unit 1505 may be a transceiver circuit of the terminal device.

The electronic device 15 may include one or more memories 1502. The memory 1502 stores one or more programs 1504. The program 1504 may be run by the processor 1501 to generate instructions 1503, so that the processor 1501 performs, according to the instructions 1503, the device collaboration method performed by the first electronic device, the device collaboration method performed by the server, and the device collaboration method performed by the second electronic device that are described in the foregoing method embodiments.

Optionally, the memory 1502 may further store data.

Optionally, the processor 1501 may further read the data stored in the memory 1502. The data and the program 1504 may be stored at a same storage address, or the data and the program 1504 may be stored at different storage addresses.

The processor 1501 and the memory 1502 may be disposed separately, or may be integrated together, for example, integrated into a system on chip (system on chip, SOC) of the terminal device.

This application further provides a computer program product. When the computer program product is executed by the processor 1501, the device collaboration method according to any one of the method embodiments of this application is implemented.

The computer program product may be stored in the memory 1502, for example, is the program 1504. After processing procedures such as preprocessing, compilation, assembly, and linking, the program 1504 is finally converted into an executable target file that can be executed by the processor 1501.

This application further provides a computer-readable storage medium. The computer-readable storage medium stores a computer program. When the computer program is executed by a computer, the device collaboration method according to any one of the method embodiments of this application is implemented. The computer program may be a high-level language program, or may be an executable target program.

The computer-readable storage medium is, for example, the memory 1502. The memory 1502 may be a volatile memory or a nonvolatile memory, or the memory 1502 may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It may be clearly understood by a person skilled in the art that, for the purpose of convenient and brief description, for a detailed working process and a generated technical effect of the foregoing apparatus and device, refer to a corresponding process and technical effect in the foregoing method embodiments. Details are not described herein again.

In several embodiments provided in this application, the disclosed system, apparatuses, and method may be implemented in another manner. For example, some features of the method embodiments described above may be ignored or not performed. The apparatus embodiment described above is merely an example. Division into the units is merely logical function division and may be other division during actual implementation. A plurality of units or components may be combined or integrated into another system. In addition, coupling between the units or coupling between the components may be direct coupling or indirect coupling, and the coupling may include an electrical connection, a mechanical connection, or another form of connection.

It should be understood that sequence numbers of the processes do not mean an execution sequence in embodiments of this application. The execution sequence of the processes should be determined based on functions and internal logic of the processes, and should not be constituted as any limitation on the implementation processes of embodiments of this application.

In addition, terms "system" and "network" may be used interchangeably in this specification. The term "and/or" in this specification describes only an association relationship between associated objects and represents that three relationships may exist. For example, A and/or B may indicate the following three cases: Only A exists, both A and B exist, and only B exists. In addition, the character "/" in this specification generally indicates an "or" relationship between the associated objects.

In conclusion, the foregoing descriptions are merely example embodiments of the technical solutions of this application, but are not intended to limit the protection scope of this application. Any modification, equivalent replacement, or improvement made without departing from the spirit and principle of this application shall fall within the protection scope of this application.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A device collaboration method, applied to a first electronic device, wherein the method comprises:
sending a probe request in response to a first user operation, wherein the first user operation is used to enable a device collaboration function;
receiving at least one probe response to the probe request;
determining at least one second electronic device based on the at least one probe response, wherein the first electronic device and the at least one second electronic device belong to a same communication group, an account corresponding to a part or all of the at least one second electronic device is different from an account corresponding to the first electronic device, and the probe response indicates that the first electronic device and the second electronic device belong to the same communication group; and
displaying a first control and at least one second control, wherein the first control represents the first electronic device, and the second control represents the second electronic device.

2. The method according to claim 1, wherein the probe request carries at least one of identification information of the first electronic device, the account corresponding to the first electronic device, and group identification information corresponding to the first electronic device.

3. The method according to claim 1 or 2, wherein the probe response is sent by the second electronic device when the second electronic device determines, based on the probe request and stored group information corresponding to the second electronic device, that the second electronic device and the first electronic device belong to the same communication group.

4. The method according to any one of claims 1 to 3, wherein the probe response carries the group identification information of the communication group and identification information of the second electronic device.

5. The method according to claim 3, wherein the group information is from a server, and the group information comprises at least one of the group identification information, an account of a group member, and identification information of an electronic device corresponding to the account of the group member.

6. The method according to any one of claims 1 to 5, wherein after displaying the first control and the at least one second control, the method further comprises:
sending a processing request to the server in response to a second user operation, wherein the processing request is used to establish a device collaboration link between a collaboration device and a to-be-collaborated device, the collaboration device and the to-be-collaborated device are the first electronic device and an electronic device in the at least one second electronic device, and the second user operation is used to associate the collaboration device with the to-be-collaborated device.

7. The method according to claim 6, wherein the collaboration device is the first electronic device, and after sending the processing request to the server in response to the second user operation, the method further comprises:
receiving a verification request from the to-be-collaborated device, wherein the verification request is used to determine whether the to-be-collaborated device is an authorized device, the verification request is sent by the to-be-collaborated device based on a control instruction from the server, and the control instruction is sent by the server based on the processing request; and
sending a verification response to the to-be-collaborated device when determining, based on the verification request, that the to-be-collaborated device is the authorized device, wherein the verification response is used to determine whether the first electronic device is an authorized device.

8. The method according to claim 7, wherein sending the verification response to the to-be-collaborated device when determining, based on the verification request, that the to-be-collaborated device is the authorized device comprises:
parsing the verification request to obtain identification information of the to-be-collaborated device and first encrypted information, wherein the first encrypted information is obtained by encrypting the identification information of the to-be-collaborated device based on a group identifier key corresponding to the to-be-collaborated device and a user identifier key corresponding to the to-be-collaborated device;
encrypting the identification information of the to-be-collaborated device based on a group identifier key corresponding to the first electronic device and a user identifier key corresponding to the first electronic device, to obtain second encrypted information;
when the first encrypted information matches the second encrypted information, determining that the to-be-collaborated device is the authorized device; and
sending the verification response to the to-be-collaborated device, wherein the verification response carries the identification information of the first electronic device and third encrypted information, and the third encrypted information is obtained by encrypting the identification information of the first electronic device based on the group identifier key corresponding to the first electronic device and the user identifier key corresponding to the first electronic device.

9. The method according to claim 6, wherein the to-be-collaborated device is the first electronic device, and after sending the processing request to the server in response to the second user operation, the method further comprises:
receiving a control instruction from the server, wherein the control instruction is used to control the first electronic device to establish the device collaboration link, and the control instruction is sent by the server based on the processing request;
sending a verification request to the collaboration device based on the control instruction, wherein the verification request is used to determine whether the first electronic device is an authorized device; and
establishing the device collaboration link when determining, based on a verification response from the collaboration device, that the collaboration device is an authorized device, wherein the verification response is sent by the collaboration device when the collaboration device determines that the first electronic device is the authorized device.

10. The method according to claim 9, wherein establishing the device collaboration link when determining, based on the verification response from the collaboration device, that the collaboration device is the authorized device comprises:
parsing the verification response to obtain identification information of the collaboration device and third encrypted information, wherein the third encrypted information is obtained by encrypting the identification information of the collaboration device based on a group identifier key corresponding to the collaboration device and a user identifier key corresponding to the collaboration device;
encrypting the identification information of the collaboration device based on a group identifier key corresponding to the first electronic device and a user identifier key corresponding to the first electronic device, to obtain fourth encrypted information;
when the third encrypted information matches the fourth encrypted information, determining that the collaboration device is the authorized device; and
establishing the device collaboration link.

11. The method according to claim 1, wherein displaying the first control and the at least one second control comprises:
obtaining first device information of the first electronic device and second device information of the at least one second electronic device, wherein the first device information represents a status and/or an attribute of the first electronic device, and the second device information represents a status and/or an attribute of the second electronic device;
displaying the first control based on the first device information; and
displaying the at least one second control based on the second device information of the at least one second electronic device.

12. The method according to claim 11, wherein obtaining the first device information of the first electronic device and the second device information of the at least one second electronic device comprises:
sending an obtaining request to a server, wherein the obtaining request is used to obtain the first device information and the second device information of the at least one second electronic device; and
receiving the first device information and the second device information of the at least one second electronic device from the server.

13. A device collaboration method, applied to a server, wherein the method comprises:
receiving an obtaining request from a first electronic device, wherein the obtaining request is used to obtain first device information of the first electronic device and second device information of at least one second electronic device, the first device information represents a status and/or an attribute of the first electronic device, the second device information represents a status and/or an attribute of the second electronic device, the first electronic device and the at least one second electronic device belong to a same communication group, and an account corresponding to a part or all of the at least one second electronic device is different from an account corresponding to the first electronic device; and
sending the first device information and the second device information of the at least one second electronic device to the first electronic device, wherein the first device information is used to display a first control representing the first electronic device, and the second device information is used to display a second control representing the second electronic device.

14. The method according to claim 13, wherein after sending the first device information and the second device information of the at least one second electronic device to the first electronic device, the method further comprises:
receiving a processing request from the first electronic device, wherein the processing request is used to establish a device collaboration link between a collaboration device and a to-be-collaborated device; and
sending a control instruction to the to-be-collaborated device based on the processing request, wherein the control instruction is used to control the to-be-collaborated device to establish the device collaboration link.

15. The method according to claim 13, wherein before receiving the obtaining request from the first electronic device, the method further comprises:
sending group information of the communication group to a plurality of electronic devices in the communication group, wherein the group information is used by an electronic device to determine whether the electronic device and another electronic device are in the same communication group, and the plurality of electronic devices comprise the first electronic device and the at least one second electronic device.

16. The method according to claim 15, wherein the group information comprises at least one of group identification information, an account of a group member, and identification information of an electronic device corresponding to the account of the group member.

17. A device collaboration method, applied to a second electronic device, wherein the method comprises:
receiving a probe request from a first electronic device; and
sending a probe response to the first electronic device when determining, based on the probe request, that the second electronic device and the first electronic device belong to a same communication group, wherein the probe response indicates that the first electronic device and the second electronic device belong to the same communication group, and at least a part of electronic devices in the communication group correspond to different accounts.

18. The method according to claim 17, wherein the probe request carries at least one of identification information of the first electronic device, an account corresponding to the first electronic device, and group identification information corresponding to the first electronic device.

19. The method according to claim 17 or 18, wherein sending the probe response to the first electronic device when determining, based on the probe request, that the second electronic device and the first electronic device belong to the same communication group comprises:
determining, based on the probe request and stored group information corresponding to the second electronic device, whether the first electronic device and the second electronic device belong to the same communication group; and
sending the probe response to the first electronic device when the first electronic device and the second electronic device belong to the same communication group.

20. The method according to any one of claims 17 to 19, wherein the probe response carries the group identification information of the communication group and identification information of the second electronic device.

21. The method according to claim 19, wherein the group information is capable of being obtained in the following manner:
receiving the group information from a server, wherein the group information comprises at least one of the group identification information, an account of a group member, and identification information of an electronic device corresponding to the account of the group member.

22. The method according to any one of claims 17 to 21, wherein the second electronic device is a collaboration device, and after sending the probe response to the first electronic device when determining, based on the probe request, that the second electronic device and the first electronic device belong to the same communication group, the method further comprises:
receiving a verification request from a to-be-collaborated device, wherein the verification request is used to determine whether the to-be-collaborated device is an authorized device, and the verification request is sent by the to-be-collaborated device based on a control instruction from the server; and
sending a verification response to the to-be-collaborated device when determining, based on the verification request, that the to-be-collaborated device is the authorized device, wherein the verification response is used to determine whether the second electronic device is an authorized device.

23. The method according to claim 22, wherein sending the verification response to the to-be-collaborated device when determining, based on the verification request, that the to-be-collaborated device is the authorized device comprises:
parsing the verification request to obtain identification information of the to-be-collaborated device and first encrypted information, wherein the first encrypted information is obtained by encrypting the identification information of the to-be-collaborated device based on a group identifier key corresponding to the to-be-collaborated device and a user identifier key corresponding to the to-be-collaborated device;
encrypting the identification information of the to-be-collaborated device based on a group identifier key corresponding to the second electronic device and a user identifier key corresponding to the second electronic device, to obtain second encrypted information;
when the first encrypted information matches the second encrypted information, determining that the to-be-collaborated device is the authorized device; and
sending the verification response to the to-be-collaborated device, wherein the verification response carries the identification information of the second electronic device and third encrypted information, and the third encrypted information is obtained by encrypting the identification information of the second electronic device based on the group identifier key corresponding to the second electronic device and the user identifier key corresponding to the second electronic device.

24. The method according to any one of claims 17 to 21, wherein the second electronic device is a to-be-collaborated device, and after sending the probe response to the first electronic device when determining, based on the probe request, that the second electronic device and the first electronic device belong to the same communication group, the method further comprises:
receiving a control instruction from the server, wherein the control instruction is used to control establishment of a device collaboration link between the second electronic device and a collaboration device;
sending a verification request to the collaboration device based on the control instruction, wherein the verification request is used to determine whether the second electronic device is an authorized device; and
establishing the device collaboration link when determining, based on a verification response from the collaboration device, that the collaboration device is an authorized device, wherein the verification response is sent by the collaboration device when the collaboration device determines that the second electronic device is the authorized device.

25. The method according to claim 24, wherein establishing the device collaboration link when determining, based on the verification response from the collaboration device, that the collaboration device is the authorized device comprises:
parsing the verification response to obtain identification information of the collaboration device and third encrypted information, wherein the third encrypted information is obtained by encrypting the identification information of the collaboration device based on a group identifier key corresponding to the collaboration device and a user identifier key corresponding to the collaboration device;
encrypting the identification information of the collaboration device based on a group identifier key corresponding to the second electronic device and a user identifier key corresponding to the second electronic device, to obtain fourth encrypted information;
when the third encrypted information matches the fourth encrypted information, determining that the collaboration device is the authorized device; and
establishing the device collaboration link.

26. A device collaboration apparatus, comprising units configured to perform steps of the method according to any one of claims 1 to 12, or comprising units configured to perform steps of the method according to any one of claims 13 to 16 or units configured to perform steps of the method according to any one of claims 17 to 25.

27. A device collaboration apparatus, comprising a processor, wherein the processor is coupled to a memory, the memory is configured to store a program or instructions, and when the program or the instructions are executed by the processor, the device collaboration apparatus is caused to perform the method according to any one of claims 1 to 12, 13 to 16, or 17 to 25.

28. An electronic device, comprising a memory, one or more processors, and one or more programs, wherein the one or more programs are stored in the memory, and when the one or more processors execute the one or more programs, the electronic device is caused to perform the method according to any one of claims 1 to 12, 13 to 16, or 17 to 25.

29. A chip, comprising a processor, configured to invoke a computer program from a memory and run the computer program, so that an electronic device on which the chip is mounted performs the method according to any one of claims 1 to 12, 13 to 16, or 17 to 25.

30. A computer-readable storage medium, wherein the computer-readable storage medium stores a computer program or instructions, and when the computer program or the instructions are executed, a computer is caused to perform the method according to any one of claims 1 to 12, 13 to 16, or 17 to 25.

31. A computer program product, comprising computer program instructions, wherein the computer program instructions cause the computer to perform the method according to any one of claims 1 to 12, 13 to 16, or 17 to 25.
